(19) **Europäisches Patentamt European Patent Office Office européen des brevets**

(11) **EP 3 898 728 B1**

(12) **EUROPEAN PATENT SPECIFICATION**

(45) Date of publication and mention of the grant of the patent:
**08.02.2023 Bulletin 2023/06**

(21) Application number: **19839271.4**

(22) Date of filing: **20.12.2019**

(51) International Patent Classification (IPC):
**C08F 220/06** (1974.07)   **C08F 220/14** (1974.07)
**C08F 220/18** (1974.07)   **C08F 220/34** (1974.07)
**C08F 2/18** (1974.07)   **C08F 2/20** (1974.07)
**C08F 220/24** (1974.07)

(52) Cooperative Patent Classification (CPC):
(C-Sets available)
**C08F 220/06; C08F 2/20; C08F 220/14; C08F 220/1812; C08F 220/24; C08F 220/34**

(Cont.)

(86) International application number:
**PCT/IB2019/061175**

(87) International publication number:
**WO 2020/128993 (25.06.2020 Gazette 2020/26)**

(54) **POLYMERIC FLAKES FOR THE REMOVAL OF CATIONS, ANIONS AND LIPOPHILIC COMPOUNDS FROM FLUIDS**

POLYMERFLOCKEN ZUR ENTFERNUNG VON KATIONEN, ANIONEN UND LIPOPHILEN VERBINDUNGEN AUS FLUIDEN

PAILLETTES POLYMÈRES POUR L'ÉLIMINATION DE CATIONS, D'ANIONS ET DE COMPOSÉS LIPOPHILES HORS DE FLUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2018 IT 201800020947**

(43) Date of publication of application:
**27.10.2021 Bulletin 2021/43**

(73) Proprietor: **Politecnico di Milano**
**20133 Milano (IT)**

(72) Inventors:
• **MOSCATELLI, Davide**
  **20131 Milano (IT)**
• **MORBIDELLI, Massimo**
  **20131 Milano (IT)**
• **SPONCHIONI, Mattia**
  **20131 Milano (IT)**

(74) Representative: **Biggi, Cristina**
**Bugnion S.p.A.**
**Viale Lancetti 17**
**20158 Milano (IT)**

(56) References cited:
**CN-A- 107 141 396     CN-A- 108 047 361**
**KR-A- 20110 000 352     US-A1- 2007 123 639**
**US-A1- 2016 026 103**

(52) Cooperative Patent Classification (CPC): (Cont.)

C-Sets
**C08F 220/06, C08F 220/14, C08F 222/102,**
**C08F 220/585;**
**C08F 220/14, C08F 220/06, C08F 222/102,**
**C08F 220/585;**
**C08F 220/24, C08F 222/102;**
**C08F 220/34, C08F 220/14, C08F 222/102,**
**C08F 220/34;**
C08F 220/1812, C08F 222/102

**Description**

**FIELD OF THE INVENTION**

The present invention relates to a polymeric flake with a core-shell structure obtained by polymerisation of a mixture comprising A) at least one lipophilic monomer and B) at least one monomer selected from: a halogenated lipophilic monomer, an ionisable acid monomer and an ionisable basic monomer, with at least one hydrophilic monomer or in the presence of at least one polymeric stabiliser and the use thereof for the removal and/or reduction of pollutants present in a fluid.

**PRIOR ART**

Pollution means the disruption of the equilibrium of an ecosystem by a pollutant, that is, of any substance, of natural or anthropic origin, which is not part of the composition of the matrix of interest (or is present therein in a concentration that is distinctly higher than the natural values) and has an effect deemed to be a harmful on the environment. Since the 1970s the issue of environmental pollution - both atmospheric and groundwater pollution - has become of great public concern, especially in the most industrialised countries, where the phenomenon is continuously on the rise and closely linked to industrial and technological expansion. For example, the treatment of contaminated fluids, in particular liquid waste such as wastewater, represents a problem common to various technological sectors: from the production of drinking water to the food industry, to the pharmaceutical, textile or chemical industries, where, in particular, wastewater is an inevitable component of nearly all production processes and must necessarily be treated prior to the disposal or recycling thereof. The possible sources of contamination can be wholly diverse and can vary in terms of the amount and type of pollutants, for example of biological or chemical origin. In particular, chemical pollutants are divided into organic or inorganic pollutants. The latter represent some of the most hazardous forms of pollution, as they generally comprise heavy metals (such as, for example, Pb, Cd, Hg, etc.), known for their toxicity to living beings. Among organic species, on the other hand, the most important are hydrocarbons, pesticides, insecticides, fluoro-derivative compounds and nitro-derivative compounds, drugs and all synthetic compounds that have a marked tendency towards biological accumulation and poor biodegradability. Such pollutants can depend directly on the origin of the fluid, which can also contain within it two or more different types of pollutants simultaneously. For example, in the food industry there is generally a need to remove heavy metals from food fluids and drinking water, for which it is necessary at the same time to correct hardness, for example, by means of a specific adsorption of ions. In the case of the electrochemical industry as well, in particular in the galvanic industry, it is of great importance to remove heavy metals from process fluids and to regenerate galvanic baths, whilst in other sectors there can be a need to purify systems contaminated by hydrocarbons and lipophilic oils, as in the case, for example, of the treatment of process water in the oil industry. Something that has also become of particular interest in recent years is the treatment of water contaminated by perfluorooctanoic acid (PFOA), used as a surfactant in the emulsion polymerisation of polytetrafluoroethylene (PTFE), which is used, in turn, as a non-stick coating for kitchen utensils. Since PFOA is recognised as a carcinogenic agent, there is a pressing need for a complete and efficient reduction and/or removal of the emissions thereof and of contamination in the final product. Based on this introductory overview, it appears clear that, in the field of treatment of polluting fluids, liquid media in particular, there is a need to provide a system that can act effectively on various types of pollutant agents, also ones that are very different from one another chemically, and which at the same time may be easily separated from the treated media and regenerated with ease. At the present state of the art, many solutions are adopted which exploit various systems based on different physicochemical characteristics. CN107141396 discloses a weak-polar macroporous resin used for removing nitrobenzene from water comprising a polymer obtained by the suspension polymerization of styrene and acrylonitrile in the presence of divinylbenzene, polyvinyl alcohol and AIBN. CN108047361 discloses magnetic chelating resin for purification of water bodies containing organic matter and heavy metals. The particles comprise methylacrylate and divinylbenzene.

In recent years, among the various strategies proposed, two categories have encountered the most interest: nanoparticles and the aggregates thereof and ion-exchange resins. Patent EP3146537 describes, for example, the synthesis of magnetic nanoparticles used in the removal of hydrocarbon pollutants and metal ions. The nanoparticles comprise a magnetite core and an outer coating comprising a mixture of a lipophilic compound and a hydrophilic compound. The outer coating has the dual function of stabilising the nanoparticles in an aqueous environment and making them capable of adsorbing lipophilic compounds and/or metal ions, whereas the magnetic core enables the microaggregates formed as a result of said adsorption to be magnetically separated following the treatment of the liquid. However, the application of such a system is limited, since it has a technical disadvantage in that said nanoparticles can be used in a very narrow pH range (in particular a pH greater than 7). In fact, in the case of pH values lower than 7, the magnetic core of the nanoparticles and of the aggregates formed tends to release iron ions in the liquid to be treated, thus contaminating the medium and precluding the system's applicability in many sectors, such as, for example, in the treatment of wine or electrochemical baths. Another category that has encountered much interest in recent years is ion exchange resins. An ion exchange can be defined as a reversible chemical interaction between a solid and a fluid in which certain ions are exchanged between said solid and said fluid. A classic example of an ion exchange process is a cation exchange in which a fluid passes through a bed consisting of microspheres of a porous resin comprising cations, such as, for example, hydrogen ions, which are exchanged with metal ions present in the fluid to be treated. For example, patent WO2001030495 describes ion exchange resins comprising polymeric particles with sizes on a micrometric scale produced by adding, to a suitable cross-linking agent, weak acids (for example methacrylic/acrylic acid) in the case of cation-exchange resins (also called "cation exchangers") or weak bases in the case of anion-exchange resins (also called "anion exchangers"). The main limitation of this technology lies, however, in the fact that the efficiency of these resins is limited to specific pH ranges. In particular, in the case of cation exchangers, the efficiency is limited to pHs higher than the pKa of the weak acid used, whereas in the case of anion exchangers, their efficiency is limited to values lower than 14-pKb of the weak base used. This precludes their application in many sectors, such as, for example, in the galvanic industry or in the treatment of wines, where operation at acidic pHs is required. Moreover, a further disadvantage connected to the use of the ion exchange resins currently employed for the treatment of fluid streams is related to the fact that, as a result of the treatment, there is an alteration of the pH and/or the organoleptic properties of the treated medium. In the sector there thus remains a need to have an effective system for removing pollutants from fluid media which can be used in a wide range of pH and temperature conditions without being subject to phenomena of degradation or alteration, thus avoiding the release of any species that may be potentially harmful or toxic or that may chemically modify the medium itself. The present invention solves the above-mentioned problems, well known in the sector, by providing polymeric flakes which are stable and effective in a wide pH and temperature range and do not alter the treated medium from either a chemical or organoleptic viewpoint. Furthermore, the flakes of the present invention not only have a porous core and, consequently, a large surface area enabling an effective adsorption of/interaction with pollutants, but, thanks to the polymerisation of different types of monomers, they also enable a simultaneous removal and/or reduction of various categories of pollutants, thus proving to be extremely versatile for a variety of applications in the treatment of polluted systems, e.g. the treatment and recovery of contaminated water, regeneration of galvanic baths, removal of heavy metals from food fluids and drinking water, correction of water hardness or treatment of acidic streams in wine production.

## SUMMARY OF THE INVENTION

The present invention relates to a polymeric flake obtained by polymerisation, in a suspension or dispersion in an aqueous solvent, of a mixture comprising A) at least one lipophilic monomer and B) at least one monomer selected from: a halogenated lipophilic monomer, an ionisable acid monomer and an ionisable basic monomer, with at least one neutral hydrophilic monomer or a hydrophilic monomer having a fixed charge. Alternatively, said polymeric flake is obtained by polymerisation, in a suspension or dispersion in an aqueous solvent, of a mixture comprising A) at least one lipophilic monomer and B) at least one monomer selected from: a halogenated lipophilic monomer, an ionisable acid monomer and an ionisable basic monomer, in the presence of at least one polymeric stabiliser.

For each embodiment, the polymerisation takes place in the presence of a cross-linking agent and a polymerisation initiator.

The polymeric flake obtained has a core-shell-like structure, in which the central part, i.e. the core, possesses high porosity and consists mainly or essentially of the at least one lipophilic monomer cross-linked with at least one monomer selected from: a halogenated lipophilic monomer, an ionisable acid monomer and an ionisable basic monomer, whilst the outer shell consists mainly or essentially of the at least one neutral hydrophilic monomer or a hydrophilic monomer having a fixed charge cross-linked with the at least one lipophilic monomer and with the at least one monomer selected from: a halogenated lipophilic monomer, an ionisable acid monomer and an ionisable basic monomer of the core. Polymerisation in a suspension or dispersion requires, in fact, that the at least one lipophilic monomer, the at least one monomer selected from: a halogenated lipophilic monomer, an ionisable acid monomer and an ionisable basic monomer, the cross-linking agent and the polymerisation initiator are mixed until complete dissolution and are then dispersed or suspended in an aqueous solution of the at least one hydrophilic monomer. In this manner, during cross-linking, the at least one lipophilic monomer and the at least one monomer selected from: a halogenated lipophilic monomer, an ionisable acid monomer and an ionisable basic monomer are concentrated inside the polymeric flake, forming a core-like structure, endowed with high porosity, whilst the at least one hydrophilic monomer is disposed externally, forming a shell-like structure in which the hydrophilic chains of the cross-linked polymer are directed towards the external aqueous environment.

Alternatively, the polymeric flake obtained has a core-shell-like structure, in which the central part, i.e. the core, possesses high porosity and consists mainly or essentially of the at least one lipophilic monomer cross-linked with at least one monomer selected from: a halogenated lipophilic monomer, an ionisable acid monomer and an ionisable basic monomer, whilst the outer shell consists mainly or essentially of the at least one polymeric stabiliser adsorbed onto the surface of the cross-linked core. In this case, the polymerisation in a suspension or dispersion requires, in fact, that the at least one lipophilic monomer, the at least one monomer selected from: a halogenated lipophilic monomer, an ionisable acid monomer and an ionisable basic monomer, the cross-linking agent and the polymerisation initiator are mixed until complete dissolution and are then dispersed or suspended in an aqueous solution of the at least one polymeric stabiliser. In this manner, during the reaction, the at least one lipophilic monomer and the at least one monomer selected from: a halogenated lipophilic monomer, an ionisable acid monomer and an ionisable basic monomer are concentrated inside the polymeric flake, forming a cross-linked core-like structure, endowed with high porosity, whilst the at least one polymeric stabiliser is disposed externally, becoming adsorbed onto the surface of the core and forming a shell-like structure in which the hydrophilic functionalities of the at least one polymeric stabiliser are directed towards the external aqueous environment. The invention also relates to the use of the polymeric flake for the removal and/or reduction of pollutants present in a fluid, for example in a liquid, or a gas. Said pollutants are selected in the group consisting of metal cations, metal anions, hydrocarbon pollutants and halogenated organic pollutants.

## BRIEF DESCRIPTION OF THE FIGURES

Figure 1 shows the trend in efficiency of the "anionic flakes" of the invention in the case of removal of copper cations from 1000 ppm standard solutions of copper $Cu^{2+}$ at a neutral pH (white bars) and at an acidic pH (grey bars).

Figure 2 shows the trend in efficiency of the "anionic flakes" of the invention in the case of removal of copper cations from 1000 ppm standard solutions of copper $Cu^{2+}$ in successive removal and regeneration cycles (by washing with a 10 mM solution of HCl).

Figure 3 shows the trend in efficiency of the "cationic flakes" of the invention in the case of removal of vanadate anions from 100 ppm standard solutions of $VO_5^{3-}$ at a neutral pH (white bars) and a basic pH (grey bars).

Figure 4 shows the trend in efficiency of the "cationic flakes" of the invention in the case of removal of vanadate anions from 100 ppm standard solutions of $VO_5^{3-}$ in successive removal and regeneration cycles (by washing with a 10 mM solution of NaOH).

Figure 5 shows the trend in efficiency, in the case of removal of PFOA from 1000 ppm standard solutions, of the "fluorinated flakes" of the invention obtained starting from the monomer (a) 2,2,2-trifluoroethyl methacrylate (TFEMA) (grey bars), (b) 1,1,1,3,3,3-hexafluoroisopropyl methacrylate (HFIPMA) (light grey bars) and (c) heptadecafluorodecyl methacrylate (HDFDMA) (white bars).

Figure 6 shows the trend in efficiency of the "fluorinated flakes" of the invention obtained starting from HDFDMA, in the case of removal of PFOA from 1000 ppm standard solutions in successive removal and regeneration cycles (by washing with acetone).

## DETAILED DESCRIPTION OF THE INVENTION

The term "fluid" means a material (generally consisting of a substance or a mixture of several substances) which deforms indefinitely (flows) if subjected to a shear stress, irrespective of the entity of the latter: it is a particular state of matter which comprises liquids, gaseous substances, plasma and plastic solids. For the purposes of the present invention the fluid is preferably a liquid or a gas.

The term "wastewater" means all water that does not meet the quality requirements of drinking water and is not usable even for industrial purposes without prior treatment. The term "removal" of pollutants means the separation and elimination of said pollutants from a liquid medium.

The term "reduction" of pollutants, by contrast, means the separation and elimination of said pollutants from a gaseous medium.

The term "fixed charge" or "fixed electrostatic charge" means a fixed positive or negative electrostatic charge.

The term "fixed positive electrostatic charge" means a charge present on a molecule which gives rise to a positive electrostatic potential and is present irrespective of the pH and temperature conditions. Monomers with a fixed positive charge are therefore conjugate acids of strong bases (pKb<0).

The term "fixed negative electrostatic charge" means a charge present on a molecule which gives rise to a negative electrostatic potential and is present irrespective of the pH and temperature conditions. Monomers with a fixed negative charge are therefore conjugate bases of strong acids (pKa<0).

The term "ionisable acid monomer" means a monomer with an acidic functionality (Brønsted-Lowry and/or Lewis acid) and pKa>0.

The term "ionisable basic monomer" means a monomer with a basic functionality (Brønsted-Lowry and/or Lewis base) and pKb>0.

The term "emulsion of hydrocarbons or hydrocarbon emulsion" refers to hydrocarbons present in an aqueous solvent in the form of an emulsion of the "oil in water" type.

The term "halogenated lipophilic monomer" refers to a lipophilic monomer that has functionalities of a halogenated substance, such as, for example, a fluorinated lipophilic monomer or a chlorinated lipophilic monomer.

The term "halogenated organic pollutants" or "halogenated organic compounds" refers to organic pollutants which contain functionalities of a halogenated substance, such as, for example, fluorinated organic pollutants or chlorinated organic pollutants. The term "flake", for the purposes of the present invention, refers to a plurality of morphologies that may be taken on by polymeric particles. Said morphologies are preferably selected in the group consisting of: spherical morphology, needle-like morphology, rod-like morphology, star-like morphology or lamellar morphology.

The present invention relates to a polymeric flake obtained from the polymerisation, in a suspension or dispersion in an aqueous solvent, of a mixture comprising A) at least one lipophilic monomer and B) at least one monomer selected from: a halogenated lipophilic monomer, an ionisable acid monomer and an ionisable basic monomer,

(i) with at least one neutral hydrophilic monomer or a hydrophilic monomer having a fixed charge, or
(ii) in the presence of at least one polymeric stabiliser.

Said polymerisation according to point (i) or point (ii) takes place in the presence of at least one cross-linking agent and a polymerisation initiator.

In one embodiment, the at least one halogenated lipophilic monomer is a fluorinated lipophilic monomer and/or a chlorinated lipophilic monomer. In a preferred embodiment, the mixture comprises A) at least one lipophilic monomer and B) at least one halogenated lipophilic monomer, said at least one halogenated monomer preferably being selected from a fluorinated lipophilic monomer and a chlorinated lipophilic monomer. In another preferred embodiment, the mixture comprises A) at least one lipophilic monomer and B) at least one ionisable acid monomer or at least one ionisable basic monomer. In a further embodiment, the mixture comprises A) at least one lipophilic monomer and B) at least one halogenated lipophilic monomer and at least one ionisable acid monomer.

In a further embodiment, the mixture comprises A) at least one lipophilic monomer and B) at least one halogenated lipophilic monomer and at least one ionisable basic monomer. The at least one lipophilic monomer is selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene.

The at least one halogenated lipophilic monomer is selected in the group consisting of 2,2,2-trifluoroethyl methacrylate (TFEMA), 1,1,1,3,3,3-hexafluoroisopropyl methacrylate (HFIPMA), heptadecafluorodecyl methacrylate (HDFDMA) and pentadecafluorononyl methacrylate (PDFNMA), vinyl chloride monomer (VCM) and 1,1-dichloroethane.

The at least one neutral hydrophilic monomer or a hydrophilic monomer having a fixed charge is selected in the group consisting of 2-acrylamido-2-methyl-1-propanesulphonic acid (AMPS), potassium 3-sulphopropyl methacrylate, vinylsulphonic acid, vinylphosphonic acid, (3-acrylamidopropyl)trimethylammonium chloride, (3-methacryloylamino)propyl-trimethylammonium chloride, (vinylbenzyl)trimethylammonium chloride, 2-(methacryloyloxy)ethyl-trimethylammonium chloride (MADQUAT), 2-(acryloyloxy)ethyl-trimethylammonium chloride, N,N-dimethylacrylamide, polyethylene glycol (PEG) derivatives, 2-hydroxyethyl acrylate, styrenesulphonic acid, N-2-hydroxypropyl methacrylamide, acrylamide and 2-aminoethyl methacrylate.

In one embodiment, the polyethylene glycol (PEG) derivatives are selected in the group consisting of polyethylene glycol) methyl ether methacrylate and/or polyethylene glycol) methacrylate with a molecular weight comprised between 300 and 2000 Da.

The at least one polymeric stabiliser is selected from polyvinyl alcohol, polyvinyl pyrrolidone, poly(methacrylic acid) and polyethylene glycol (PEG).

The at least one ionisable acid monomer is selected in the group consisting of methacrylic acid, acrylic acid, mono-2-(methacryloyloxy)ethyl succinate and itaconic acid;

The at least one ionisable basic monomer is selected in the group consisting of 2-(dimethylamino)ethyl methacrylate (DMAEMA), N,N-dimethylacrylamide, 2-aminoethyl methacrylate and 2-aminoethyl acrylate.

The polymerisation of the monomers takes place in a suspension or dispersion in an aqueous solvent. The aqueous solvent is water or an aqueous solution of an inorganic acid, for example hydrochloric acid, or a basic aqueous solution, for example a solution of sodium hydroxide.

According to one embodiment, the at least one lipophilic monomer, the at least one monomer selected from: a halogenated lipophilic monomer, an ionisable acid monomer and an ionisable basic monomer, the cross-linking agent and the polymerisation initiator are mixed until complete dissolution and then suspended or dispersed in an aqueous solution of the at least one hydrophilic monomer. Alternatively, the at least one lipophilic monomer, the at least one monomer selected from: a halogenated lipophilic monomer, an ionisable acid monomer and an ionisable basic monomer, the cross-linking agent and the polymerisation initiator are mixed until complete dissolution and then suspended or dispersed in an aqueous solution of the at least one polymeric stabiliser.

The suspension or dispersion thus obtained is left to react for the time necessary for polymerisation, for example for 2-12 hours, under heat. At the end of polymerisation, the polymeric flakes obtained are separated from the solution, for example by centrifugation. The polymeric flakes can be used in a dry form, i.e. in the form of a powder, or redispersed in distilled water.

The polymeric flakes thus obtained have a core-shell-like structure which comprises a cross-linked porous core obtained from the polymerisation of the at least one lipophilic monomer, of the at least one monomer selected from: a halogenated lipophilic monomer, an ionisable acid monomer and an ionisable basic monomer, with the at least one neutral hydrophilic monomer or hydrophilic monomer having a fixed charge. Following said reaction, the at least one polymerised cross-linked hydrophilic monomer, together with the at least one lipophilic monomer and the at least one monomer selected from: a halogenated lipophilic monomer, an ionisable acid monomer and an ionisable basic monomer, is disposed in such a way as to exhibit the hydrophilic functionalities in an external position (i.e. towards the external aqueous reaction environment), thus forming a hydrophilic shell around the porous cross-linked lipophilic core.

Alternatively, the polymeric flakes obtained have a core-shell-like structure, in which the central part, i.e. the core, possesses high porosity and consists mainly or essentially of the at least one lipophilic monomer cross-linked with the at least one monomer selected from: a halogenated lipophilic monomer, an ionisable acid monomer and an ionisable basic monomer, whilst the outer shell consists mainly or essentially of the at least one polymeric stabiliser adsorbed onto the surface of the cross-linked core. In this case, the polymerisation in a suspension or dispersion requires that during the reaction, the at least one lipophilic monomer, and the at least one monomer selected from: a halogenated lipophilic monomer, an ionisable acid monomer and an ionisable basic monomer are concentrated inside the polymeric flake so as to form a cross-linked core-like structure, endowed with high porosity, whereas the at least one polymeric stabiliser is disposed externally, becoming adsorbed onto the surface of the core itself and forming a shell-like structure in which the hydrophilic functionalities of the at least one polymeric stabiliser are directed towards the external aqueous environment.

In a particularly preferred embodiment of the present invention, the polymeric flake is obtained from the polymerisation, in a suspension or dispersion in an aqueous solvent, of a mixture comprising A) at least one lipophilic monomer and B) at least one ionisable acid monomer or at least one ionisable basic monomer,

> (i) with at least one neutral hydrophilic monomer or a hydrophilic monomer having a fixed charge, or
> (ii) in the presence of at least one polymeric stabiliser;

said monomers or said at least one stabiliser being as previously described.

In a further embodiment, likewise particularly preferred, said mixture comprises A) at least one lipophilic monomer and B) at least one halogenated lipophilic monomer and at least one ionisable acid monomer. In yet a further embodiment, likewise particularly preferred, said mixture comprises A) at least one lipophilic monomer and B) at least one halogenated lipophilic monomer and at least one ionisable basic monomer.

According to the aforesaid particularly preferred embodiments, i.e. wherein said mixture comprises at least one ionisable acid monomer or at least one ionisable basic monomer, the polymerisation reaction takes place, in the case of use of the at least one ionisable acid monomer, at a pH lower than the pKa of said at least one ionisable acid monomer, preferably comprised between 0 and 3.5, more preferably between 1 and 2.5; or, in the case of use of the at least one ionisable basic monomer, at a pH higher than the pKa of said at least one ionisable basic monomer, preferably comprised between 9 and 14, more preferably between 10 and 12.5. Advantageously, the use, in the polymerisation reaction, of the at least one ionisable acid monomer or the at least one ionisable basic monomer at the aforesaid pH values enables the effective confinement and concentration thereof inside the lipophilic and/or halogenated lipophilic core at the time of formation of the polymeric flakes having a core-shell structure according to the present invention.

Without wishing to be bound to a specific theory, the Applicant has found that the at least one ionisable acid monomer or the at least one ionisable basic monomer, following the characteristic division between the ionic form and the neutral form, is capable of modifying its hydrophilicity according to the pH of the reaction environment. For example, in the case of an ionisable acid monomer, the ratio between the ionic form (hereinafter indicated as A$^-$) and the acid form (hereinafter indicated as AH) takes on the following expression (where the square brackets indicate a molar concentration):

$$[A^-]/[AH]=10^{(pH-pKa)}$$

In the case of an ionisable basic monomer, by contrast, the ratio between the ionic form (hereinafter indicated as BH$^+$) and the basic form (hereinafter indicated as B) takes on the following expression (where the square brackets, in this case as well, indicate a molar concentration):

$$[BH^+]/[B]=10^{(pKa-pH)}$$

It follows that, in the case of an ionisable acid monomer, such as, for example, methacrylic acid (pKa of about 4.8), at pHs higher than the pKa, said ionisable acid monomer is mainly found in an ionic form and will therefore be soluble in an aqueous environment and scarcely miscible with lipophilic substances (for example lipophilic monomers and/or halogenated lipophilic monomers). Following the polymerisation reaction, said ionisable acid monomer, being in an ionic form, will mainly be concentrated in the outer hydrophilic shell of the polymeric flakes that have formed, thus assuming the function of a stabiliser by virtue of the electrostatic potential it contributes to creating on the surface. According to the embodiment of the present invention as previously described, by contrast, if the polymerisation reaction is carried out at a pH comprised between 0 and 3.5, preferably between 1 and 2.5, the at least one ionisable acid monomer will mainly be found in its acid form and will thus be poorly soluble in an aqueous environment but effectively miscible with lipophilic substances (for example lipophilic monomers and/or halogenated lipophilic monomers). Following the polymerisation reaction, therefore, a lipophilic and/or halogenated lipophilic core will be formed, wherein the at least one ionisable acid monomer is effectively concentrated and cross-linked.

Similarly, in the case of an ionisable basic monomer, such as, for example, 2-(dimethylamino)ethyl methacrylate (pKa of about 8.5), at pHs lower than the pKa, said ionisable basic monomer is mainly in an ionic form and will therefore be soluble in an aqueous environment and scarcely miscible with lipophilic substances (for example lipophilic monomers and/or halogenated lipophilic monomers). Following the polymerisation reaction, said ionisable basic monomer, being in an ionic form, will mainly be concentrated in the outer hydrophilic shell of the polymeric flakes that have formed, thus assuming the function of a stabiliser by virtue of the electrostatic potential it contributes to creating on the surface. According to the embodiment of the present invention as previously described, by contrast, if the polymerisation reaction is carried out at a pH comprised between 9 and 14, preferably between 10 and 12.5, the at least one ionisable basic monomer will mainly be found in its basic form and will thus be poorly soluble in an aqueous environment but effectively miscible with lipophilic substances (for example lipophilic monomers and/or halogenated lipophilic monomers). Following the polymerisation reaction, therefore, a lipophilic and/or halogenated lipophilic core will be formed, wherein the at least one ionisable basic monomer is effectively concentrated and cross-linked.

In both embodiments, once the polymerisation reaction has ended, and the pH of the external environment has been brought to a value preferably of around 7, the at least one ionisable acid monomer or the at least one ionisable basic monomer will in any case remain effectively inside the lipophilic and/or halogenated lipophilic core, being cross-linked to the at least one lipophilic and/or halogenated lipophilic monomer.

With regard to the hydrophilic shell, it has the dual function of stabilising the polymeric flake, preventing the aggregation thereof in the fluid to be treated, and of participating actively, by surface adsorption and/or electrostatic interaction, in the removal and/or reduction of pollutants in the fluid.

In the embodiment in which at least one hydrophilic monomer with a fixed charge is used, wherein said fixed charge is a fixed positive or negative electrostatic charge, the outer shell, in addition to having a function of stabilisation in the aqueous environment and of adsorption/interaction with charged pollutants such as, for example, metal ions, also assures the functioning and effectiveness of the polymeric flake in removing and/or reducing pollutants in a wide range of pH and temperature conditions, thus making the flake versatile and usable in different applications.

The at least one hydrophilic monomer with a fixed charge is preferably a hydrophilic monomer with a positive fixed charge or a hydrophilic monomer with a negative fixed charge.

The at least one hydrophilic monomer with a negative fixed charge is preferably selected in the group consisting of 2-acrylamido-2-methyl-1-propanesulphonic acid (AMPS), potassium 3-sulphopropyl methacrylate, styrenesulphonic acid, vinylphosphonic acid and vinylsulphonic acid.

The at least one hydrophilic monomer with a positive fixed charge is preferably selected in the group consisting of (3-acrylamidopropyl)trimethylammonium chloride, (3-methacryloylamino)propyl-trimethylammonium chloride, (vinylbenzyl)trimethylammonium chloride, 2-(methacryloyloxy)ethyl-trimethylammonium chloride (MADQUAT) and 2-(acryloyloxy)ethyl-trimethylammonium chloride.

In the embodiment in which at least one neutral hydrophilic monomer is used, the outer shell performs the function of stabilising and preventing the aggregation of the polymeric flake in an aqueous environment.

The at least one neutral hydrophilic monomer is preferably selected in the group consisting of N,N-dimethylacrylamide, polyethylene glycol (PEG) derivatives, 2-hydroxyethyl acrylate, N-2-hydroxypropyl methacrylamide, acrylamide and 2-aminoethyl methacrylate.

In one embodiment, the polyethylene glycol (PEG) derivatives are selected in the group consisting of polyethylene glycol) methyl ether methacrylate and/or polyethylene glycol) methacrylate with a molecular weight comprised between 300 and 2000 Da.

In the embodiment in which at least one polymeric stabiliser is used, in this case as well the outer shell performs the function of stabilising and preventing the aggregation of the polymeric flake in an aqueous environment.

The at least one polymeric stabiliser is preferably selected in the group consisting of polyvinyl alcohol, polyvinyl pyrrolidone, poly(methacrylic acid) and polyethylene glycol (PEG).

The core-shell-like structure of the polymeric flake of the invention is a three-dimensional structure with a large surface area. The large surface area is a consequence of the high degree of cross-linking of the polymerised chains, which impart diffuse porosity inside the core, thus ensuring that the polymeric flake will be able to effectively adsorb a large amount of pollutants, including species with a low molecular weight, inside the cross-linked porous core.

The polymeric flake of the invention, therefore, by virtue of its core-shell-like structure, enables pollutant species to be adsorbed both inside the cross-linked porous core with a large surface area and onto the surface, thanks to the functionalities imparted to the outer shell:

(i) by the polymerisation and cross-linking of the at least one hydrophilic monomer or
(ii) by the adsorption of the at least one polymeric stabiliser onto the surface of the cross-linked porous core.

In the embodiment in which the outer hydrophilic shell has fixed negative or positive electrostatic charges, it is possible to obtain the simultaneous removal and/or reduction of different types of pollutants. In particular, lipophilic pollutants, for example hydrocarbon pollutants and/or halogenated organic pollutants, preferably fluorinated and/or chlorinated, migrate towards the cross-linked porous core and are thus adsorbed inside the polymeric flake, whilst the charged hydrophilic pollutants, such as, for example, metal ions (metal anions or cations) interact electrostatically with the fixed charges of the shell and are thus adsorbed onto the surface of the polymeric flake.

In this case, if the cross-linked porous core is obtained from the polymerisation of the at least one lipophilic monomer and/or of the at least one halogenated lipophilic monomer in a mixture with the at least one ionisable acid monomer or the at least one ionisable basic monomer, it is possible to obtain the removal and/or reduction of metal anions or cations, preferably cations or anions of heavy metals, with a greater efficiency than when the charges are localised in the outer shell alone, by adsorption of said metal anions or cations, preferably cations or anions of heavy metals, in the porous core.

In the embodiment in which the outer hydrophilic shell does not have fixed electrostatic charges, thus in the embodiment in which said hydrophilic shell is obtained following the polymerisation and cross-linking of the at least one neutral hydrophilic monomer, it is possible to obtain the simultaneous removal and/or reduction of different types of pollutants; in particular, lipophilic pollutants are adsorbed inside the cross-linked porous core, whilst hydrophilic pollutants are adsorbed onto the surface upon interacting with the hydrophilic shell of the polymeric flake of the invention.

This also applies in the embodiment in which the outer hydrophilic shell is obtained following the polymerisation of the at least one lipophilic monomer and of the at least one monomer selected from: a halogenated lipophilic monomer, an ionisable acid monomer and an ionisable basic monomer, in the presence of at least one polymeric stabiliser which is adsorbed onto the surface of the cross-linked core obtained following the polymerisation reaction. In this case as well, therefore, it is possible to obtain the simultaneous removal and/or reduction of different types of pollutants; in particular, lipophilic pollutants are adsorbed inside the cross-linked porous core, whilst hydrophilic pollutants are adsorbed onto the surface upon interacting with the hydrophilic shell of the polymeric flake of the invention.

In both cases, in the embodiment in which the cross-linked porous core is obtained from the polymerisation of the at least one lipophilic monomer and/or of the at least one halogenated lipophilic monomer in a mixture with the at least one ionisable acid monomer or the at least one ionisable basic monomer, it is possible to obtain the removal and/or reduction of metal anions or cations, preferably cations or anions of heavy metals, with a greater efficiency than when the charges are localised in the outer shell alone, by adsorption of said metal anions or cations, preferably cations or anions of heavy metals, in the porous core.

According to the embodiment in which the cross-linked porous core is obtained from the polymerisation of the at least one halogenated lipophilic monomer, preferably selected from a fluorinated and/or chlorinated lipophilic monomer, in addition to the at least one lipophilic monomer and, in the presence or absence of the at least one ionisable acid monomer or the at least one ionisable basic monomer, the outer shell can be obtained starting from the at least one neutral hydrophilic monomer or hydrophilic monomer with a fixed charge, or, alternatively, it can be formed by the at least one polymeric stabiliser adsorbed onto the surface of the cross-linked core. In these embodiments, the polymeric flake is adapted for the removal and/or reduction of halogenated organic pollutants, preferably fluorinated and/or chlorinated, from a fluid and simultaneously of metal anions or cations if the shell has a negative or positive charge.

In one embodiment, the polymeric flake of the invention comprises **a hydrophilic shell with a fixed negative charge and a lipophilic and halogenated lipophilic core, preferably fluorinated and/or chlorinated,** obtained from the polymerisation, in the presence of a cross-linking agent and a polymerisation initiator, of:

(i) at least one lipophilic monomer in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene; and
(ii) at least one halogenated lipophilic monomer selected in the group consisting of 2,2,2-trifluoroethyl methacrylate (TFEMA), 1,1,1,3,3,3-hexafluoroisopropyl methacrylate (HFIPMA), heptadecafluorodecyl methacrylate (HDFDMA) and pentadecafluorononyl methacrylate (PDFNMA), vinyl chloride monomer (VCM) and 1,1-dichloroethane;
with
(iii) at least one hydrophilic monomer having a fixed negative charge selected in the group consisting of 2-acrylamido-2-methyl-1-propanesulphonic acid (AMPS), potassium 3-sulphopropyl methacrylate, styrenesulphonic acid, vinylphosphonic acid and vinylsulphonic acid.

In other words, this embodiment is equivalent to saying that said flake is obtained from the polymerisation, in a suspension or dispersion in an aqueous solvent, of: a mixture comprising A) said at least one lipophilic monomer and B) said at least one halogenated lipophilic monomer, preferably fluorinated and/or chlorinated; with said at least one hydrophilic monomer having a fixed negative charge.

In another embodiment of the invention, the polymeric flake comprises **a hydrophilic shell with a fixed positive charge and a lipophilic and halogenated lipophilic core, preferably fluorinated and/or chlorinated,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;
and

(ii) at least one halogenated lipophilic monomer selected in the group consisting of 2,2,2-trifluoroethyl methacrylate (TFEMA), 1,1,1,3,3,3-hexafluoroisopropyl methacrylate (HFIPMA), heptadecafluorodecyl methacrylate (HDFDMA) and pentadecafluorononyl methacrylate (PDFNMA), vinyl chloride monomer (VCM) and 1,1-dichloroethane:
with

(iii) at least one hydrophilic monomer having a fixed positive charge selected in the group consisting of (3-acrylamidopropyl)trimethylammonium chloride, (3-methacryloylamino)propyl-trimethylammonium chloride, (vinylbenzyl)trimethylammonium chloride, 2-(methacryloyloxy)ethyl-trimethylammonium chloride (MADQUAT) and 2-(acryloyloxy)ethyl-trimethylammonium chloride.

In other words, this embodiment is equivalent to saying that said flake is obtained from the polymerisation, in a suspension or dispersion in an aqueous solvent, of: a mixture comprising A) said at least one lipophilic monomer and B) said at least one halogenated lipophilic monomer, preferably fluorinated and/or chlorinated; with said at least one hydrophilic monomer having a fixed positive charge.

In a further embodiment, the polymeric flake of the invention comprises **a neutral hydrophilic shell and a lipophilic and halogenated lipophilic core, preferably fluorinated and/or chlorinated,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;
and

(ii) at least one halogenated lipophilic monomer selected in the group consisting of 2,2,2-trifluoroethyl methacrylate (TFEMA), 1,1,1,3,3,3-hexafluoroisopropyl methacrylate (HFIPMA), heptadecafluorodecyl methacrylate (HDFDMA) and pentadecafluorononyl methacrylate (PDFNMA), vinyl chloride monomer (VCM) and 1,1-dichloroethane;
with

(iii) at least one neutral hydrophilic monomer selected in the group consisting of N,N- dimethylacrylamide, polyethylene glycol (PEG) derivatives, 2-hydroxyethyl acrylate, N-2-hydroxypropyl methacrylamide, acrylamide and 2-aminoethyl methacrylate;
or

(iv) in the presence of at least one polymeric stabiliser selected in the group consisting of polyvinyl alcohol, polyvinyl pyrrolidone, poly(methacrylic acid) and polyethylene glycol (PEG).

In other words, this embodiment is equivalent to saying that said flake is obtained from the polymerisation, in a suspension or dispersion in an aqueous solvent, of: a mixture comprising A) said at least one lipophilic monomer and B) said at least one halogenated lipophilic monomer, preferably fluorinated and/or chlorinated; with said at least one neutral hydrophilic monomer or in the presence of said at least one polymeric stabiliser.

In another embodiment of the invention the polymeric flake comprises a **hydrophilic shell with a fixed negative charge and a core comprising lipophilic functionalities and acidic or basic functionalities,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;
with

(ii) at least one ionisable acid monomer selected in the group consisting of methacrylic acid, acrylic acid, mono-2-(methacryloyloxy)ethyl succinate and itaconic acid;
or with

(iii) at least one ionisable basic monomer selected in the group consisting of 2-(dimethylamino)ethyl methacrylate (DMAEMA), N,N-dimethylacrylamide, 2-aminoethyl methacrylate and 2-aminoethyl acrylate;
further with

(iv) at least one hydrophilic monomer having a fixed negative charge selected in the group consisting of 2-acrylamido-2-methyl-1-propanesulphonic acid (AMPS), potassium 3-sulphopropyl methacrylate, styrenesulphonic acid, vinylphosphonic acid and vinylsulphonic acid.

In other words, this embodiment is equivalent to saying that said flake is obtained from the polymerisation, in a suspension or dispersion in an aqueous solvent, of: a mixture comprising A) said at least one lipophilic monomer and B) said at least one ionisable acid monomer or said at least one ionisable basic monomer; with said at least one hydrophilic monomer having a fixed negative charge.

In a further embodiment of the invention the polymeric flake comprises **a hydrophilic shell with a fixed positive charge and a core comprising lipophilic functionalities and acidic or basic functionalities,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;
with
(ii) at least one ionisable acid monomer selected in the group consisting of methacrylic acid, acrylic acid, mono-2-(methacryloyloxy)ethyl succinate and itaconic acid;
or with
(iii) at least one ionisable basic monomer selected in the group consisting of 2-(dimethylamino)ethyl methacrylate (DMAEMA), N,N-dimethylacrylamide, 2-aminoethyl methacrylate and 2-aminoethyl acrylate;
further with
(iv) at least one hydrophilic monomer having a fixed positive charge selected in the group consisting of (3-acrylamidopropyl)trimethylammonium chloride, (3-methacryloylamino)propyl-trimethylammonium chloride, (vinylbenzyl)trimethylammonium chloride, 2-(methacryloyloxy)ethyl-trimethylammonium chloride (MADQUAT) and 2-(acryloyloxy)ethyl-trimethylammonium chloride.

In other words, this embodiment is equivalent to saying that said flake is obtained from the polymerisation, in a suspension or dispersion in an aqueous solvent, of: a mixture comprising A) said at least one lipophilic monomer and B) said at least one ionisable acid monomer or said at least one ionisable basic monomer; with said at least one hydrophilic monomer having a fixed positive charge.

In another embodiment of the invention the polymeric flake comprises **a neutral hydrophilic shell and a core comprising lipophilic functionalities and acidic or basic functionalities,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;
with
(ii) at least one ionisable acid monomer selected in the group consisting of methacrylic acid, acrylic acid, mono-2-(methacryloyloxy)ethyl succinate and itaconic acid;
or with
(iii) at least one ionisable basic monomer selected in the group consisting of 2-(dimethylamino)ethyl methacrylate (DMAEMA), N,N-dimethylacrylamide, 2-aminoethyl methacrylate and 2-aminoethyl acrylate;
further with
(iv) at least one neutral hydrophilic monomer selected in the group consisting of N,N-dimethylacrylamide, polyethylene glycol (PEG) derivatives, 2-hydroxyethyl acrylate, N-2-hydroxypropyl methacrylamide, acrylamide, 2-aminoethyl methacrylate;
or
(v) in the presence of at least one polymeric stabiliser selected in the group consisting of polyvinyl alcohol, polyvinyl pyrrolidone, poly(methacrylic acid) and polyethylene glycol.

In other words, this embodiment is equivalent to saying that said flake is obtained from the polymerisation, in a suspension or dispersion in an aqueous solvent, of: a mixture comprising A) said at least one lipophilic monomer and B) said at least one ionisable acid monomer or said at least one ionisable basic monomer; with said at least one neutral hydrophilic monomer or in the presence of said at least one polymeric stabiliser.

In another embodiment of the invention the polymeric flake comprises **a hydrophilic shell with a fixed negative charge and a core comprising halogenated lipophilic functionalities (preferably fluorinated and/or chlorinated) and acidic or basic functionalities,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;
(ii) at least one halogenated lipophilic monomer selected in the group consisting of 2,2,2-trifluoroethyl methacrylate (TFEMA), 1,1,1,3,3,3-hexafluoroisopropyl methacrylate (HFIPMA), heptadecafluoro-

decyl methacrylate (HDFDMA) and pentadecafluor-ononyl methacrylate (PDFNMA), vinyl chloride monomer (VCM) and 1,1-dichloroethane; and

(iii) at least one ionisable acid monomer selected in the group consisting of methacrylic acid, acrylic acid, mono-2-(methacryloyloxy)ethyl succinate and itaconic acid;

or, alternatively, said at least one ionisable acid monomer,

(iv) at least one ionisable basic monomer selected in the group consisting of 2-(dimethylamino)ethyl methacrylate (DMAEMA), N,N-dimethylacrylamide, 2-aminoethyl methacrylate and 2-aminoethyl acrylate;

with

(v) at least one hydrophilic monomer having a fixed negative charge selected in the group consisting of 2-acrylamido-2-methyl-1-propanesulphonic acid (AMPS), potassium 3-sulphopropyl methacrylate, styrenesulphonic acid, vinylphosphonic acid and vinylsulphonic acid.

In other words, this embodiment is equivalent to saying that said flake is obtained from the polymerisation, in a suspension or dispersion in an aqueous solvent, of: a mixture comprising A) said at least one lipophilic monomer and B) said at least one halogenated lipophilic monomer (preferably fluorinated and/or chlorinated) and said at least one ionisable acid monomer or said at least one ionisable basic monomer;

with said at least one hydrophilic monomer having a fixed negative charge.

In another embodiment of the invention, the polymeric flake comprises **a hydrophilic shell with a fixed positive charge and a core comprising halogenated lipophilic functionalities (preferably fluorinated and/or chlorinated) and acidic or basic functionalities,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;

(ii) at least one halogenated lipophilic monomer selected in the group consisting of 2,2,2-trifluoroethyl methacrylate (TFEMA), 1,1,1,3,3,3-hexafluoroisopropyl methacrylate (HFIPMA), heptadecafluorodecyl methacrylate (HDFDMA) and pentadecafluorononyl methacrylate (PDFNMA), vinyl chloride monomer (VCM) and 1,1-dichloroethane; and

(iii) at least one ionisable acid monomer selected in the group consisting of methacrylic acid, acrylic acid, mono-2-(methacryloyloxy)ethyl succinate and itaconic acid;

or, alternatively, said at least one ionisable acid monomer,

(iv) at least one ionisable basic monomer selected in the group consisting of 2-(dimethylamino)ethyl methacrylate (DMAEMA), N,N-dimethylacrylamide, 2-aminoethyl methacrylate and 2-aminoethyl acrylate;

with

(v) at least one hydrophilic monomer having a fixed positive charge selected in the group consisting of (3-acrylamidopropyl)trimethylammonium chloride, (3-methacryloylamino)propyl-trimethylammonium chloride, (vinylbenzyl)trimethylammonium chloride, 2-(methacryloyloxy)ethyl-trimethylammonium chloride (MADQUAT) and 2-(acryloyloxy)ethyl-trimethylammonium chloride.

In other words, this embodiment is equivalent to saying that said flake is obtained from the polymerisation, in a suspension or dispersion in an aqueous solvent, of: a mixture comprising A) said at least one lipophilic monomer and B) said at least one halogenated lipophilic monomer (preferably fluorinated and/or chlorinated) and said at least one ionisable acid monomer or said at least one ionisable basic monomer;

with said at least one hydrophilic monomer having a fixed positive charge.

Finally, in another embodiment of the invention the polymeric flake comprises **a neutral hydrophilic shell and a core comprising halogenated lipophilic functionalities (preferably fluorinated and/or chlorinated) and acidic or basic functionalities,** obtained from the polymerisation, in the presence of a cross-linking agent and a polymerisation initiator, of:

(i) at least one lipophilic monomer selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;

(ii) at least one halogenated lipophilic monomer selected in the group consisting of 2,2,2-trifluoroethyl methacrylate (TFEMA), 1,1,1,3,3,3-hexafluoroisopropyl methacrylate (HFIPMA), heptadecafluorodecyl methacrylate (HDFDMA) and pentadecafluorononyl methacrylate (PDFNMA), vinyl chloride monomer (VCM) and 1,1-dichloroethane; and

(iii) at least one ionisable acid monomer selected in the group consisting of methacrylic acid, acrylic acid, mono-2-(methacryloyloxy)ethyl succinate and itaconic acid;

or, alternatively, said at least one ionisable acid monomer,

(iv) at least one ionisable basic monomer selected in the group consisting of 2-(dimethylamino)ethyl methacrylate (DMAEMA), N,N-dimethylacrylamide, 2-aminoethyl methacrylate and 2-aminoethyl acrylate;

with

(v) at least one neutral hydrophilic monomer selected in the group consisting of N,N- dimethylacrylamide, polyethylene glycol (PEG) derivatives, 2-hydroxyethyl acrylate, N-2-hydroxypropyl methacrylamide, acrylamide and 2-aminoethyl methacrylate;

or

(vi) in the presence of at least one polymeric stabiliser selected in the group consisting of polyvinyl alcohol, polyvinyl pyrrolidone, poly(methacrylic acid) and polyethylene glycol (PEG).

In other words, this embodiment is equivalent to saying that said flake is obtained from the polymerisation, in a suspension or dispersion in an aqueous solvent, of: a mixture comprising A) said at least one lipophilic monomer and B) said at least one halogenated lipophilic monomer (preferably fluorinated and/or chlorinated) and said at least one ionisable acid monomer or said at least one ionisable basic monomer;

with said at least one neutral hydrophilic monomer or in the presence of said at least one polymeric stabiliser.

The at least one cross-linking agent used for the synthesis of the polymeric flake of the invention is preferably selected in the group consisting of ethylene glycol dimethylacrylate (EGDMA), N,N'-methylenebis(acrylamide), polyethylene glycol dimethacrylate (with a molecular weight comprised between 200 and 2500 Da), divinylbenzene, 1-4-butandiol diacrylate, trimethylpropane triacrylate, 1-4-bis(4-vinylphenoxy)butane and bis(2-methacryloyl)oxyethyl disulphide.

The use thereof enables a polymeric flake to be obtained whose polymeric chains are cross-linked, i.e. they have bonds of a covalent or ionic type between the various chains or, possibly, between two different points of the same chain, at the level of the reactive functional groups.

As previously described, the cross-linking of the polymeric chains further makes it possible to obtain a polymeric flake with a three-dimensional structure organised like a core-shell structure, i.e. a structure in which the core is a cross-linked porous core and the outer shell is a shell formed by polymeric chains cross-linked together with the chains of the core, or is a shell formed by at least one polymeric stabiliser adsorbed onto the surface of the cross-linked porous core, and which exhibit their hydrophilic functionalities towards an external aqueous environment.

The polymerisation initiator used for the synthesis of the polymeric flake of the invention is preferably selected in the group consisting of hydrophobic peroxides, preferably benzoyl peroxide, or in the group consisting of lipophilic azo initiators, preferably azobisisobutyronitrile (AIBN).

In particular, the process of polymerisation in a suspension or dispersion in an aqueous solvent of the polymeric flake comprises the steps of:

a) mixing said at least one lipophilic monomer and said at least one monomer selected from: a halogenated lipophilic monomer, an ionisable acid monomer and an ionisable basic monomer, with a cross-linking agent and with a polymerisation initiator;

b) dispersing or suspending said mixture in an aqueous solution in which said at least one hydrophilic monomer is dissolved;

or

b') dispersing or suspending said mixture in an aqueous solution of at least one polymeric stabiliser.

In one embodiment, said at least one halogenated lipophilic monomer is a fluorinated and/or chlorinated lipophilic monomer lipophilic monomer. In a particularly preferred embodiment of the invention, the mixture of step a) also comprises at least one ionisable acid monomer or at least one ionisable basic monomer.

According to one embodiment, the at least one lipophilic monomer is used in an amount comprised between 50 and 99% by weight relative to the total weight of the flake.

According to one embodiment, the at least one halogenated lipophilic monomer is used in an amount comprised between 50 and 99% by weight, preferably between 30 and 90% by weight, more preferably between 40 and 80% by weight relative to the total weight of the flake.

According to one embodiment, the at least one neutral hydrophilic monomer or a hydrophilic monomer having a fixed charge is used in an amount comprised between 0.1 and 15% by weight relative to the total weight of the flake, whilst the at least one polymeric stabiliser is used in an amount comprised between 0.1 and 15% by weight relative to the total weight of the flake.

For the purposes of the present invention, the aforesaid percentages are to be understood as percentages by weight relative to the total weight of the polymeric flake, i.e. relative to the total weight of the above-described ingredients present in the reaction mixture (excluding the at least one cross-linking agent and the at least one polymerisation initiator). Without wishing to be bound to a specific theory, the Applicant has found that it is possible to vary the size of the flakes it is desired to obtain as a function of the percentages of reaction ingredients used in steps a)-b) or b').

In the particularly preferred embodiment of the invention in which the mixture of step a) comprises A) at least one lipophilic monomer and B) at least one ionisable acid monomer or at least one ionisable basic monomer, said at least one ionisable acid monomer or said at least one ionisable basic monomer is used in an amount comprised between 30 and 90% by weight, preferably between 40 and 80% by weight relative to the total weight of the polymeric flake, i.e. relative to the total weight of the above-described ingredients present in the reaction mixture (excluding the at least one cross-linking agent and the at least one polymerisation initiator). In this case as well, without wishing to be bound to a specific theory, the Applicant has found that is possible to vary the size of the flakes it is desired to obtain as a function of the percentages of reaction ingredients used in steps a)-b) or b').

In another particularly preferred embodiment of the invention in which the mixture of step a) comprises A) at least one lipophilic monomer and B) at least one halogenated lipophilic monomer and at least one ionisable acid monomer or in the embodiment in which the mixture of step a) comprises A) at least one lipophilic monomer and B) at least one halogenated lipophilic monomer and at least one ionisable basic monomer, said at least one halogenated lipophilic monomer and said at least one ionisable acidic or basic monomer is used in an amount comprised between 30 and 90% by weight, preferably between 40 and 80% by weight relative to the total weight of the polymeric flake, i.e. relative to the total weight of the above-described ingredients present in the reaction mixture (excluding the at least one cross-linking agent and the at least one polymerisation initiator). In this case as well, without wishing to be bound to a specific theory, the Applicant has found that is possible to vary the size of the flakes it is desired to obtain as a function of the percentages of reaction ingredients used in steps a)-b) or b').

According to one embodiment of the invention, the at least one lipophilic monomer and the at least one monomer selected from: a halogenated lipophilic monomer, an ionisable acid monomer and an ionisable basic monomer, and a cross-linking agent and a polymerisation initiator are loaded into a reactor equipped with a magnetic stirrer (step a) in a ratio comprised between 1:0.5:0.1 by weight and 1:0.05:0,001 by weight, preferably in a ratio of 1: 0.15:0.015 by weight, respectively. The mixture can be degassed and made inert by bubbling nitrogen for a time of no less than 5 minutes, preferably comprised between 10 and 30 minutes. The mixture is then added to an aqueous solution (neutral, acidic or basic) comprising the at least one hydrophilic monomer, or to an aqueous solution of the at least one polymeric stabiliser, under stirring at a speed comprised between 100 and 1000 rpm, preferably between 300 and 700 rpm in order to favour the formation of the dispersion/suspension. The concentration of the dispersed/suspended phase is comprised between 0.5 and 40% by weight, preferably between 3 and 30% by weight relative to the total weight of the reaction mixture.

The dispersion/suspension can be degassed and made inert by bubbling nitrogen for a time of no less than 5 minutes, preferably comprised between 10 and 30 minutes. The suspension/dispersion is heated to a temperature comprised between 30 and 90 °C, preferably comprised between 40 and 80 °C, for a duration of time comprised between 3 and 24 hours, preferably between 5 and 10 hours, and kept under stirring at a speed comprised between 100 and 1000 rpm, preferably between 300 and 700 rpm.

The polymeric flakes obtained are then recovered by filtration or decantation in a centrifuge and washed with distilled water.

The polymeric flakes can be used in a dry form, i.e. in the form of a powder, or resuspended in water.

The polymeric flakes have a diameter with dimensions comprised between 0.5 and 200 $\mu$m, preferably between 3 and 100 $\mu$m, measured with the Dynamic Light Scattering and/or laser diffraction technique.

The polymeric flakes obtained have a polydispersity index (PDI) comprised between 0.100 and 0.600, preferably between 0.090 and 0.570.

The present invention further relates to the use of said polymeric flake for the removal and/or reduction of pollutants present in a fluid, for example a liquid or a gas.

In the embodiment in which the fluid is a liquid, said liquid is preferably selected from wastewater, galvanic baths, liquid waste liquid waste from wine production, waste from water used in the food industry, ammoniacal solutions and vegetation water.

In the embodiment in which the fluid is a gas, said gas is preferably selected from refinery vapours, vapours from industrial production plants and vapours from food production.

Said pollutants are selected in the group consisting of metal cations, metal anions, hydrocarbon pollutants and halogenated organic pollutants, preferably fluorinated and/or chlorinated organic pollutants. Said pollutants are preferably selected from copper, nickel, zinc, arsenic, vanadium, iron and chromium ions, ammonium ions, chromate, dichromate, arsenate, vanadate, phosphate and carbonate ions, aromatic hydrocarbon compounds, aliphatic hydrocarbons, $C_5$-$C_{20}$ alkanes, lubricant oils, perfluorooctanoic acid (PFOA), pesticides and polyphenols. For example, in the embodiment in which the polymeric flake of the invention comprises **a hydrophilic shell with a fixed negative charge and a lipophilic and halogenated lipophilic core, preferably fluorinated and/or chlorinated,** the polymeric flake will be effective in the simultaneous removal and/or reduction of metal cations, which will be adsorbed onto the surface of the outer shell, and hydrocarbon compounds and halogenated organic compounds which will instead be adsorbed in the cross-linked porous core.

Similarly, in the embodiment in which the polymeric flake of the invention comprises **a hydrophilic shell with a fixed positive charge and a lipophilic and halogenated lipophilic core, preferably fluorinated and/or chlorinated,** said polymeric flake will be for example effective in the simultaneous removal and/or reduction of metal anions, which will be adsorbed onto the surface of the outer shell, and of hydrocarbon compounds and halogenated organic compounds, which will instead be adsorbed in the cross-linked porous core.

In the embodiment in which the polymeric flake of the invention comprises **a neutral hydrophilic shell and a lipophilic and fluorinated lipophilic and/or**

**chlorinated lipophilic core,** said polymeric flake will be for example effective in the removal and/or reduction of hydrocarbon compounds and halogenated organic compounds, preferably fluorinated and/or chlorinated, pesticides, which will be adsorbed in the cross-linked porous core.

In the embodiment in which the polymeric flake of the invention comprises **a neutral hydrophilic shell and a core comprising lipophilic functionalities and acidic or basic functionalities,** said polymeric flake will be for example effective in the simultaneous removal and/or reduction of metal anions or cations and of hydrocarbon compounds, which will be adsorbed in the cross-linked porous core.

In the embodiment in which the polymeric flake of the invention comprises **a hydrophilic shell with a fixed negative charge and a core comprising lipophilic functionalities and acidic or basic functionalities,** said polymeric flake will be for example effective in the simultaneous removal and/or reduction of metal cations, which will be adsorbed both onto the surface of the outer shell and inside the cross-linked porous core, and hydrocarbon compounds, which will instead be adsorbed only in the cross-linked porous core.

In the embodiment in which the polymeric flake of the invention comprises a **hydrophilic shell with a fixed positive charge and a core comprising lipophilic functionalities and acidic or basic functionalities,** said polymeric flake will be for example effective in the simultaneous removal and/or reduction of metal anions, which will be adsorbed both onto the surface of the outer shell and inside the cross-linked porous core, and hydrocarbon compounds, which will instead be adsorbed only in the cross-linked porous core.

In the embodiment in which the polymeric flake of the invention comprises **a hydrophilic shell with a fixed negative charge and a core comprising halogenated lipophilic functionalities (preferably fluorinated and/or chlorinated) and acidic or basic functionalities,** said polymeric flake will be for example effective in the simultaneous removal and/or reduction of metal cations, which will be adsorbed both onto the surface of the outer shell and inside the cross-linked porous core, and hydrocarbon and halogenated organic compounds, which will instead be adsorbed in the cross-linked porous core.

In the embodiment in which the polymeric flake of the invention comprises **a hydrophilic shell with a fixed positive charge and a core comprising halogenated lipophilic functionalities (preferably fluorinated and/or chlorinated) and acidic or basic functionalities,** said polymeric flake will be for example effective in the simultaneous removal and/or reduction of metal anions, which will be adsorbed both onto the surface of the outer shell and inside the cross-linked porous core, and hydrocarbon and halogenated organic compounds, which will instead be adsorbed in the cross-linked porous core.

In the embodiment in which the polymeric flake of the invention comprises **a neutral hydrophilic shell and a core comprising halogenated lipophilic functionalities (preferably fluorinated and/or chlorinated) and acidic or basic functionalities,** said polymeric flake will be for example effective in the simultaneous removal and/or reduction of metal anions or cations and of hydrocarbon and halogenated organic compounds, preferably fluorinated and/or chlorinated, and pesticides, which will be adsorbed in the cross-linked porous core.

Therefore, the present invention provides a versatile system for preparing polymeric flakes with different functionalities which can be selected so as to favour the adsorption of the pollutant of interest.

The polymeric flake of the present invention can be in fact used effectively in the removal and/or reduction of different types of pollutants.

In one embodiment, the method of use of the invention envisages using a number of polymeric flakes (or of an aqueous suspension thereof), which are added to the medium to be treated (a fluid, preferably a liquid or a gas) and allowed to act, preferably under mechanical stirring, for a time comprised between 30 seconds and 60 minutes, preferably between 30 seconds and 10 minutes, in relation to the concentration of the pollutant present in the medium and the final degree of purity desired.

At the end of the treatment, the polymeric flakes are separated from the treated medium by means of techniques which are known in the art.

In the embodiment in which the treated medium is a liquid, the flakes are separated by means of gravitational filtration, decantation or centrifugation or hydrocyclones.

In the embodiment in which the treated medium is a gas, the flakes are separated by means of filtration or cyclones.

The polymeric flake of the invention is easily recoverable and recyclable, since it can be regenerated following use by washing with solutions (called regeneration solutions) that are appropriately selected according to the type of pollutant. Such regeneration solutions are selected from aqueous solutions of HCl, NaCl, KCl, NaOH, KOH, NaNOs, $CaCl_2$ or $MgCl_2$ or organic solvents such as, for example, acetone, ethanol, isopropyl alcohol, dimethyl sulphoxide and butyl acetate.

These solutions, called regeneration solutions, re-establish the adsorption properties of the polymeric flake and/or the interaction thereof with pollutants. In the embodiment in which the pollutants of interest are metal cations, the regeneration solution is preferably selected from a 150 g/L solution of NaCl, $CaCl_2$ or KCl or a 10 mM solution of HCl.

In the embodiment in which the pollutants of interest are metal anions, the regeneration solution is preferably selected from a 150 g/L solution of NaCl, $CaCl_2$ or KCl or a 10 mM solution of NaOH.

In the embodiment in which the pollutants of interest are hydrocarbon pollutants or fluorinated and/or chlorinated organic pollutants, the regeneration solution is preferably selected from acetone, ethanol or isopropyl alcohol.

Following the regeneration treatment, the flakes are thoroughly washed with distilled water in order to remove the excess ions of the regeneration solutions used. On completion of the regeneration treatment, the polymeric flakes of the invention can be reused, according to the method described, for a second cycle of removal and/or reduction of pollutants.

The polymeric flakes of the invention show a high effectiveness in removing and/or reducing pollutants for more than 5 treatment/regeneration cycles.

This high recyclability is mainly due to the great stability of the polymeric flakes of the invention in a wide range of pH and temperature conditions, a property that is closely connected to the chemical nature of the flakes of the invention and their characteristic core-shell-like structure.

Furthermore, the high resistance of the flakes of the invention to degradation phenomena makes it possible to avoid the release of any potentially harmful or toxic species in the fluid to be treated, as well as enabling the possibility of completely recovering the polymeric flake and thus of being able to reuse it.

The polymeric flakes of the present invention therefore constitute a versatile system, thanks not only to the above-mentioned characteristics of stability and recyclability, but also to the possibility of combining several different functionalities in a mutually independent manner, thus enabling both the adsorption efficiency and the selectivity towards different types of pollutants to be increased without the need to synthesise two different types of flake.

**EXAMPLES**

In the family of examples 0 the synthesis of the various categories of polymeric flakes of the present invention is described.

Example 0.1 Synthesis of polymeric flakes comprising a hydrophilic shell with a fixed negative charge and a lipophilic core with ionisable acid groups "anionic flakes").

0.6 g of 2-acrylamido-2-methyl-1 -propanesulphonic acid (AMPS) were dissolved in 180 g of a solution 10 mM of HCl in water (pH = 2) and transferred into a glass flask provided with a magnetic stirrer. 10 g of methacrylic acid, 10 g of methyl methacrylate, 4 g of ethylene glycol dimethylacrylate (EGDMA) (20% by weight relative to the monomers) and 0.36 g of AIBN (1.5 % by weight relative to the monomers) were mixed until complete dissolution and dispersed in the aqueous phase previously prepared, so as to obtain a dispersed phase concentration of 10% by weight. The dispersion was rendered inert by bubbling nitrogen for 30 minutes and then left to react at 80 °C for 6 hours. At the end of the reaction, the flakes that had formed were recovered by centrifugation at 4000 rpm for 10 minutes, washed with a 1 mM solution of NaOH and, finally, redispersed in distilled water or, alternatively, filtered and dried so as to be used as a powder. Sizes were measured by means of the Dynamic Light Scattering technique and showed to be equal to 3.7 $\pm$ 0.5 $\mu$m with a polydispersity index (PDI) equal to 0.312 $\pm$ 0.03.

Example 0.2 Synthesis of polymeric flakes comprising a hydrophilic shell with a fixed positive charge and a lipophilic core with ionisable basic groups ("cationic flakes").

0.6 g of 2-(methacryloyloxy)ethyl-trimethylammonium chloride (MADQUAT) were dissolved in 180 g of a 10 mM solution of NaOH in water (pH = 12) and transferred into a glass flask provided with a magnetic stirrer. 10 g of 2-(dimethylamino)ethyl methacrylate (DMAEMA), 10 g of methyl methacrylate, 4 g of ethylene glycol dimethacrylate (EGDMA) (20% by weight relative to the monomers) and 0.36 g of AIBN (1.5 % by weight relative to the monomers) were mixed until complete dissolution and dispersed in the aqueous phase previously prepared, so as to obtain a concentration of the dispersed phase equal to 10% by weight. The dispersion was first rendered inert by bubbling nitrogen for 30 minutes and then left to react at 80 °C for 6 hours. At the end of the reaction, the flakes that had formed were recovered by centrifugation at 4000 rpm for 10 minutes, washed with a 1 mM solution of HCl and, finally, redispersed in distilled water or, alternatively, filtered and dried so as to be used as a powder. Sizes were measured by means of the Dynamic Light Scattering technique and showed to be equal to 12.2 $\pm$ 1.5 $\mu$m with a polydispersity index (PDI) equal to 0.289 $\pm$ 0.05.

Example 0.3 Synthesis of polymeric flakes comprising a neutral hydrophilic shell and a fluorinated lipophilic core ("fluorinated flakes")

3.28 g of polyvinyl alcohol were dissolved in 82 g distilled water and the solution was transferred into a glass flask provided with a magnetic stirrer. 15 g of 2,2,2-trifluoroethyl methacrylate (TFEMA), 3 g of ethylene glycol dimethacrylate (EGDMA) (20% by weight relative to the monomers) and 0.27 g of benzoyl peroxide (1.5 % by weight relative to the monomers) were mixed until complete dissolution and dispersed in the aqueous phase previously prepared, so as to obtain a concentration of dispersed phase equal to 18% by weight. The dispersion was first rendered inert by bubbling nitrogen for 30 minutes and then left to react at 80 °C for 6 hours. At the end of the reaction, the flakes that had formed were recovered by centrifugation at 4000 rpm for 10 minutes, washed with acetone, vacuum dried at 35 °C and, finally, redispersed in distilled water or, alternatively, used directly as a powder. Sizes were measured by means of the Dynamic Light Scattering technique and showed to be equal to 15 ± 2.3 μm with a polydispersity index (PDI) equal to 0.36 ± 0.17.

In the family of examples 1, experiments relating to the efficiency of the polymeric flakes of the present invention in removing pollutants from liquids are described.

Materials and methods

All of the types of polymeric flakes synthesised according to the process of the present invention were tested by means of a standard method that provides for the flakes to be dispersed in a solution with a known concentration of the pollutant it is desired to remove i.e. metal cations, metal anions, hydrocarbons and perfluorinated compounds.

The flakes were left in contact with said solution for 30 minutes and then removed by atmospheric filtration. Finally, a determination was made of the residual concentration of the pollutant analysed and, consequently, the efficiency of the polymeric flakes of the invention in removing pollutants, expressed as milligrams of pollutant adsorbed per gram of polymeric flakes.

Example 1: Evaluation of the performance of polymeric flakes comprising a hydrophilic shell with a fixed negative charge and a lipophilic core with ionisable acid groups "anionic flakes").

In order to evaluate the efficiency of the "anionic flakes" of the invention in removing cationic pollutants, the copper(II) ($Cu^{2+}$) ion was selected as the reference cation. A standard aqueous solution was prepared from $CuSO_4 \cdot 7H_2O$ with a 1000 ppm concentration of $Cu^{2+}$ ions measured by means of the UV-Vis spectrometry technique. The solution containing copper was treated with an excess of a 30% $NH_3$ solution (1 ml of solution of $NH_3$ every 9 ml of solution of copper) in order to form the tetraamine copper complex with a characteristic peak of absorption at a wavelength of 530 nm.

For the purpose of carrying out the experiment correctly, a calibration curve was constructed between 10 and 1000 ppm by diluting the standard copper solution.

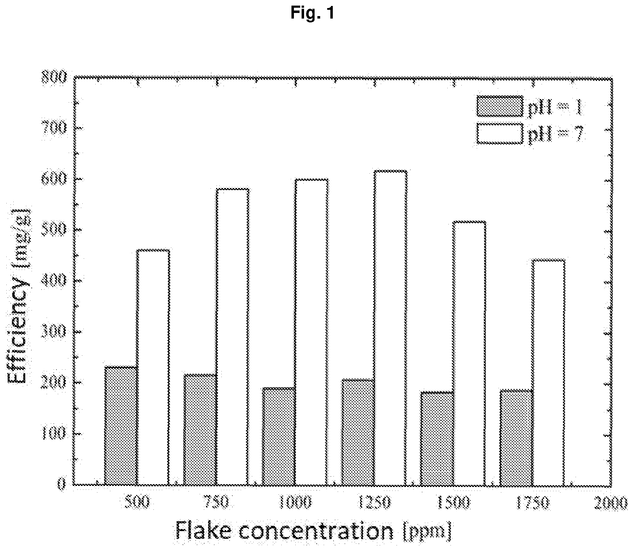

The efficiency of the "anionic flakes" of the present invention in removing pollutants at different concentrations in the case of 1000 ppm standard copper solutions at a neutral pH (pH: 7.0, white bars) and at an acidic pH (pH: 1.0, dark grey bars) is shown in figure 1. Based on the results obtained, it is possible to observe that, in the case of treatment of copper solutions at a neutral pH, the removal efficiency of the "anionic flakes" of the invention reaches a value of 600 mg of copper per gram of polymeric flakes. In the case of an acidic pH, on the other hand, it may be noted that the efficiency of the flakes of the present invention is lower, but in any case equal to an acceptable efficiency value (around 200 mg/g).

Furthermore, the pH of the standard copper solution was measured by means of an Accumet AE6 pH meter (Fisher Scientific) following the treatment with the flakes of the present invention. The pH of said solution remained unchanged from the starting pH, unlike what occurs, by contrast, in classic ion-exchange resins, as confirmed by the comparative experiment carried out with an Amberlist ion-exchange resin, which, after being used on the same standard copper solution, led to a considerable acidification of the solution, whose pH following the treatment went from 7 to 2.

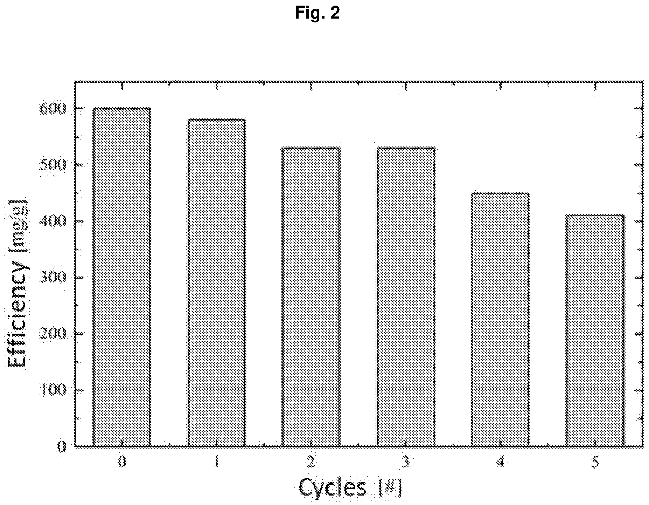

Finally, the "anionic flakes" of the present invention were regenerated by washing with a 10 mM solution of HCl and used in subsequent removal cycles, where they showed acceptable efficiencies, above 400 mg/g up to 5 regeneration cycles, as shown in figure 2.

Example 1.2: Evaluation of the performance of polymeric flakes comprising a hydrophilic shell with a fixed positive charge and a lipophilic core with ionisable basic groups ("cationic flakes").

In order to evaluate the efficiency of the "cationic flakes" of the invention in removing anionic pollutants, the vanadate anion $VO_5^{3-}$ was selected as the anion of reference. A standard aqueous solution was prepared from sodium metavanadate with a 100 ppm concentration of vanadate ions measured by the ICP-MS (inductively-coupled plasma - mass spectrometry) technique.

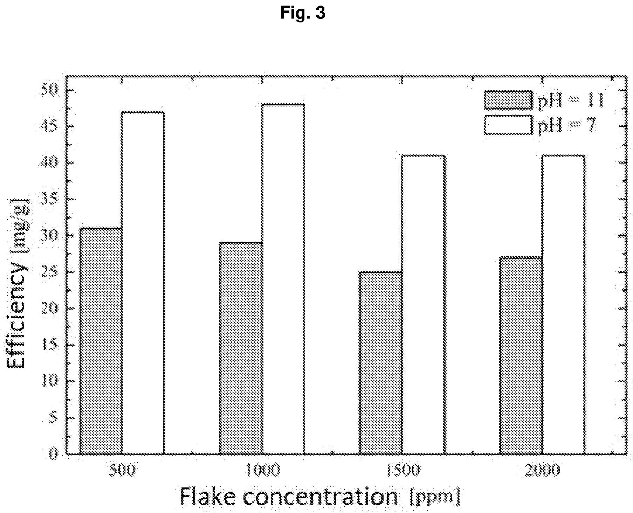

The efficiency of the "cationic flakes" of the present invention in removing pollutants at different concentrations in the case of standard solutions of the vanadate ion $VO_5^{3-}$ 100 ppm at a neutral pH (pH: 7.0, white bars) and a basic pH (pH: 11.0, dark grey bars) is shown in figure 3.

Based on the results obtained, it is possible to observe that the "cationic flakes" of the invention are capable of removing the vanadate anion with a removal efficiency that arrives as high as 48 mg/g at a neutral pH, thus reducing the concentration in the solution from 100 ppm to 20 ppm using 2000 ppm of flakes.

Furthermore, the "cationic flakes" of the invention are capable of removing the vanadate anion with acceptable efficiency values (around 30 mg/g) also at basic pHs (pH:11).

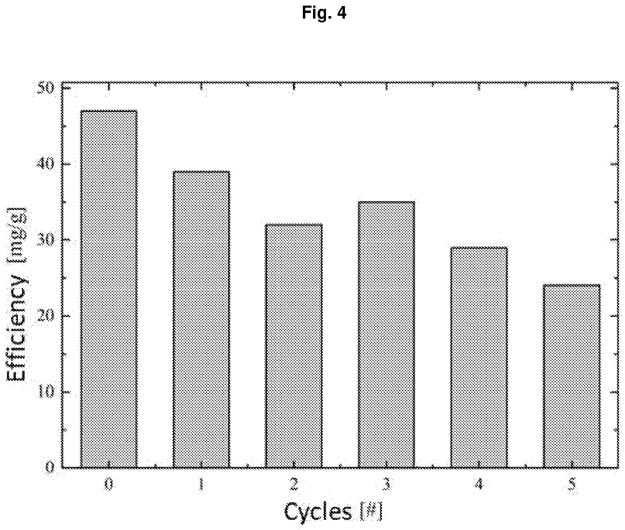

Finally, the "cationic flakes" of the present invention were regenerated by washing with a 10 mM solution of HCl and used in subsequent removal cycles, where they showed acceptable efficiencies, above 25 mg/g up to 5 regeneration cycles, as shown in figure 4. At every new removal cycle, furthermore, the pH of the standard vanadate solution was measured by means of an Accumet AE6 pH meter (Fisher Scientific) following the treatment. The pH of said solution remained unchanged from the starting pH.

Example 1.3: Evaluation of the performance of polymeric flakes comprising a neutral hydrophilic shell and a fluorinated lipophilic core ("fluorinated flakes").

In order to evaluate the efficiency of the "fluorinated flakes" of the invention in removing fluorine-based pollutants, perfluorooctanoic acid (PFOA) was selected as the reference pollutant. A standard aqueous solution was prepared with a 1000 ppm concentration of perfluorooctanoic acid, evaluated by measuring the COD (chemical oxygen demand) with an HI83399 multiparameter photometer (Hanna Instruments).

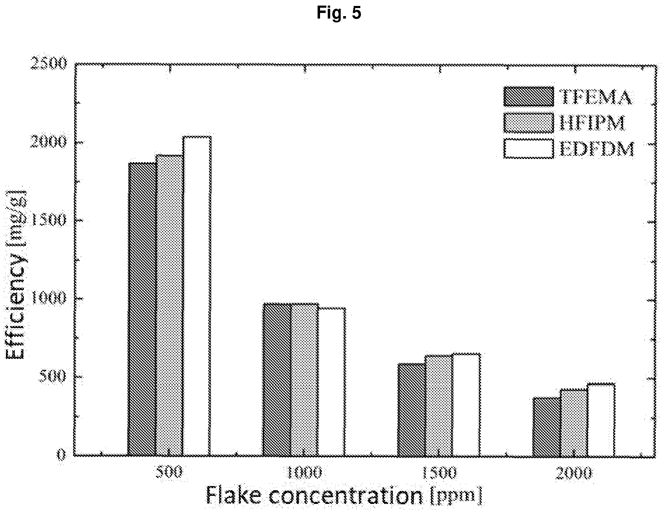

The efficiency of the "fluorinated flakes" of the present invention in removing pollutants at different concentrations in the case of 1000 ppm standard solutions of PFOA is shown in figure 5. The different "fluorinated flakes" tested were obtained starting from three different monomers, distinguished on the basis of the number of fluorine atoms present in each and were respectively equal to 3 in the case of the monomer 2,2,2-trifluoroethyl methacrylate (TFEMA), 6 in the case of the monomer 1,1,1,3,3,3-hexafluoroisopropyl methacrylate (HFIPM) and 17 in the case of the monomer heptadecafluorodecyl methacrylate (EDFDM).

Based on the results obtained, it is possible to observe that in the case of treatment of solutions of PFOA, the efficiency of the "fluorinated flakes" of the invention in removing pollutants reaches high values, particularly at low concentrations of use of the flakes, where the maximum limit of the removal efficiency is a nearly complete removal of the pollutant from the treated solution.

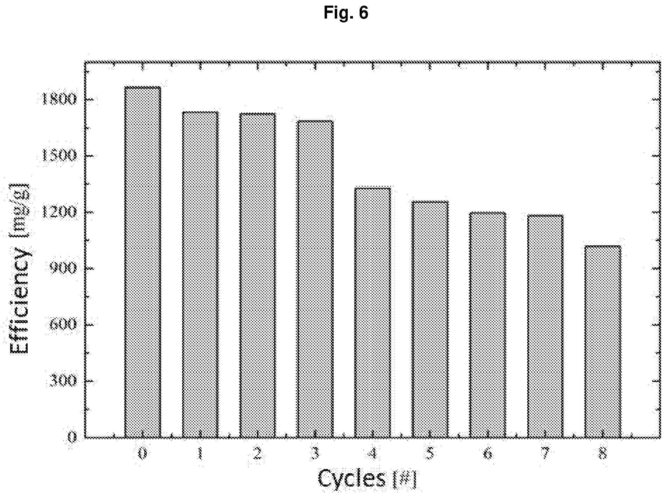

As expected, the efficiency increases with increases in the number of fluorine atoms contained in the monomer used to synthesise the polymeric flakes. Regeneration of the fluorinated flakes is achieved by washing with an organic solvent such as, for example, acetone, ethanol or isopropyl alcohol. Figure 6 shows the efficiency, in the case of flakes obtained starting from EDFDM, over a number of removal and regeneration cycles. The high recyclability of the flakes of the invention is demonstrated by the fact that the tested flakes showed a removal efficiency that remained high in the various removal and regeneration cycles, in which the effectiveness of the flakes of the invention was maintained for over cycles, with a 50% loss of efficiency between the first and eighth cycles.

**Claims**

1. A polymeric flake obtained by polymerisation, in a suspension or dispersion in an aqueous solvent, of a mixture comprising A) at least one lipophilic monomer and B) at least one monomer selected from: a halogenated lipophilic monomer, an ionisable acid monomer and an ionisable basic monomer:

(i) with at least one neutral hydrophilic monomer or at least one hydrophilic monomer having a fixed charge,
or
(ii) in the presence of at least one polymeric stabiliser;

wherein:

said at least one lipophilic monomer is selected in the group consisting of methyl methacrylate, 2-hydroxyethyl methacrylate, butyl acrylate, butyl methacrylate, hexyl acrylate, hexyl methacrylate, lauryl acrylate, lauryl methacrylate, vinyl acetate, acrylonitrile and styrene;
said at least one lipophilic halogenated monomer is selected in the group consisting of 2,2,2-trifluoroethyl methacrylate (TFEMA), 1,1,1,3,3,3-hexafluoroisopropyl methacrylate (HFIPMA), heptadecafluorodecyl methacrylate (HDFDMA) and pentadecafluorononyl methacrylate (PDFNMA), vinyl chloride monomer (VCM) and 1,1-dichloroethene;
said at least one neutral hydrophilic monomer or said at least one hydrophilic monomer having a fixed charge is selected in the group consisting of 2-acrylamido-2-methyl-1-propanesulphonic acid (AMPS), potassium 3-sulphopropyl methacrylate, vinylsulphonic acid, vinylphosphonic acid, (3-acrylamidopropyl)trimethylammonium chloride, (3-methacryloylamino)propyl-trimethylammonium chloride, (vinylbenzyl)trimethylammonium chloride, 2-(methacryloyloxy)ethyl-trimethylammonium chloride (MADQUAT), 2-(acryloyloxy)ethyl-trimethylammonium chloride, N,N-dimethylacrylamide, polyethylene glycol (PEG) derivatives, 2-hydroxyethyl acrylate, styrenesulphonic acid, N-2-hydroxypropyl methacrylamide, acrylamide and 2-aminoethyl methacrylate;
said at least one ionisable acid monomer is selected in the group consisting of methacrylic acid, acrylic acid, mono-2-(methacryloyloxy)ethyl succinate, mono-2-(acryloyloxy)ethyl succinate and itaconic acid;
said at least one ionisable basic monomer is selected in the group consisting of 2-(dimethylamino)ethyl methacrylate (DMAEMA), N,N-dimethylacrylamide, 2-aminoethyl methacrylate and 2-aminoethyl acrylate;
said polymeric stabiliser is selected from polyvinyl alcohol, polyvinyl pyrrolidone, poly(methacrylic acid) and polyethylene glycol (PEG);

and wherein said polymerisation, according to point (i) or (ii), takes place in the presence of at least one cross-linking agent and at least one polymerisation initiator and is performed by using said at least one monomer selected from: a halogenated lipophilic monomer, an ionisable acid monomer and an ionisable basic monomer in an amount comprised between 30 and 90% by weight, preferably between 40 and 80% by weight relative to the total weight of the polymeric flake.

2. The polymeric flake according to claim 1, wherein, when the at least one ionisable acid monomer is used, the polymerisation in a suspension or dispersion in an aqueous solvent is performed at a pH lower than the pKa of said at least one ionisable acid monomer, preferably comprised between 0 and 3.5, whereas, when the at least one ionisable basic monomer is used, the polymerisation in a suspension or dispersion in an aqueous solvent is performed at a pH higher than the pKa of said at least one ionisable basic monomer, preferably comprised between 9 and 14.

3. The polymeric flake according to claim 1 or 2 comprising a core consisting essentially of the at least one lipophilic monomer and of the at least one monomer selected from: a halogenated lipophilic monomer, an ionisable acid monomer and an ionisable basic monomer, cross-linked with each other, and an outer shell essentially consisting of:

    (i) the at least one neutral hydrophilic monomer or hydrophilic monomer having a fixed charge, cross-linked with the at least one lipophilic monomer and with the at least one monomer selected from: a halogenated lipophilic monomer, an ionisable acid monomer and an ionisable basic monomer of the core;
    or
    (ii) the at least one polymeric stabiliser adsorbed on the surface of the core.

4. The polymeric flake according to any one of claims 1 to 3, wherein said polymerisation in a suspension or dispersion in an aqueous solvent comprises the steps of:

    a) mixing the at least one lipophilic monomer the at least one monomer selected from: a halogenated lipophilic monomer, an ionisable acid monomer and an ionisable basic monomer, with a cross-linking agent and a polymerisation initiator;
    b) suspending or dispersing said mixture in an aqueous solution in which the at least one neutral hydrophilic monomer or hydrophilic monomer having a fixed charge is dissolved;
    or
    b') suspending or dispersing said mixture in an aqueous solution of the at least one polymeric stabiliser.

5. The polymeric flake according to any one of claims 1 to 4, wherein said at least one lipophilic monomer is used in an amount comprised between 50 and 99% by weight, said at least one neutral hydrophilic monomer or hydrophilic monomer having a fixed charge is used in an amount comprised between 0.1 and 15% by weight, said at least one polymeric stabiliser is used in an amount comprised between 0.1 and 15% by weight relative to the total weight of the polymeric flake.

6. The polymeric flake according to any one of claims 1 to 5, comprising a hydrophilic shell with a fixed charge, wherein said fixed charge is a negative fixed charge, and a lipophilic and/or halogenated lipophilic core, obtained from the polymerisation of:

    a mixture of A) at least one lipophilic monomer and B) at least one monomer selected from: a halogenated lipophilic monomer, an ionisable acid monomer and an ionisable basic monomer; with
    at least one hydrophilic monomer having a negative fixed charge selected in the group consisting of 2-acrylamido-2-methyl-1-propanesulphonic acid (AMPS), potassium 3-sulphopropyl methacrylate, vinylphosphonic acid, styrenesulphonic acid and vinylsulphonic acid.

7. The polymeric flake according to any one of claims 1 to 5, comprising a hydrophilic shell with a fixed charge, wherein said fixed charge is a positive fixed charge, and a lipophilic and/or halogenated lipophilic core, obtained from the polymerisation of:

    a mixture comprising A) at least one lipophilic monomer and B) at least one monomer selected from a halogenated lipophilic monomer, an ionisable acid monomer and an ionisable basic monomer; with
    at least one hydrophilic monomer having a positive fixed charge selected in the group consisting of (3-acrylamidopropyl)trimethylammonium chloride, (3-methacryloylamino)propyl-trimethylammonium chloride, (vinylbenzyl)trimethylammonium chloride, 2-(methacryloyloxy)ethyl-trimethylammonium chloride (MADQUAT) and 2-(acryloyloxy)ethyl-trimethylammonium chloride.

8. The polymeric flake according to any one of claims 1 to 5, comprising a neutral hydrophilic shell and a lipophilic and/or halogenated lipophilic core obtained from the polymerisation of a mixture comprising A) at least one lipophilic monomer and B) at least one monomer selected from a halogenated lipophilic monomer, an ionisable acid monomer and an ionisable basic monomer with:

(i) at least one neutral hydrophilic monomer selected from N,N-dimethylacrylamide, polyethylene glycol (PEG) derivatives, 2-hydroxyethyl acrylate, N-2-hydroxypropyl methacrylamide, acrylamide and 2-aminoethyl methacrylate; or

(ii) in the presence of at least one polymeric stabiliser selected from polyvinyl alcohol, polyvinyl pyrrolidone, poly(methacrylic acid) and polyethylene glycol (PEG).

9. The polymeric flake according to any one of the preceding claims having a diameter with dimensions comprised between 0.5 and 200 $\mu$m, preferably between 3 and 100 $\mu$m, said dimensions being measured with the Dynamic Light Scattering and/or laser diffraction technique.

10. A use of the polymeric flake according to any one of the preceding claims for the removal and/or reduction of pollutants present in a fluid, wherein said pollutants are selected in the group consisting of metal cations, metal anions, hydrocarbon pollutants, halogenated organic pollutants, preferably selected from copper ion, nickel, zinc, arsenic, vanadium, iron, chrome, ammonium ion, chromate ion, dichromate, arsenate, vanadate, phosphate, carbonate, aromatic hydrocarbon compounds, aliphatic hydrocarbon compounds, alkanes $C_5$-$C_{20}$, fluorinated organic compounds, chlorinated organic compounds, lubricant oils, perfluorooctanoic acid (PFOA),pesticides and polyphenols.

11. The use of the polymeric flake according to claim 10, wherein said fluid is a liquid or a gas, said liquid being preferably selected from wastewater, galvanic baths, liquid waste from wine production, waste from water used in the food industry, ammoniacal solutions and vegetation water, said gas being preferably selected from refinery vapours, vapours from industrial production plants and vapours from food production.

12. The use of the polymeric flake according to claim 6 for the simultaneous removal and/or reduction of metal anions and hydrocarbon pollutants and/or halogenated organic pollutants.

13. The use of the polymeric flake according to claim 7 for the simultaneous removal and/or reduction of metal cations and hydrocarbon pollutants and/or halogenated organic pollutants.

14. The use of the polymeric flake according to claim 8 for the selective removal and/or reduction of hydrocarbon pollutants and/or halogenated organic pollutants.

**Patentansprüche**

1. Polymerflocke, erhalten durch Polymerisation, in einer Suspension oder Dispersion in einem wässrigen Lösungsmittel, einer Mischung, umfassend A) mindestens ein lipophiles Monomer und B) mindestens ein Monomer, ausgewählt aus: einem halogenierten lipophilen Monomer, einem ionisierbaren Säuremonomer und einem ionisierbaren basischen Monomer:

(i) mit mindestens einem neutralen hydrophilen Monomer oder mindestens einem hydrophilen Monomer mit einer festen Ladung
oder
(ii) in Gegenwart mindestens eines polymeren Stabilisators;

wobei:

das mindestens eine lipophile Monomer aus der Gruppe bestehend aus Methylmethacrylat, 2-Hydroxyethylmethacrylat, Butylacrylat, Butylmethacrylat, Hexylacrylat, Hexylmethacrylat, Laurylacrylat, Laurylmethacrylat, Vinylacetat, Acrylnitril und Styrol ausgewählt ist;
das mindestens eine lipophile halogenierte Monomer aus der Gruppe bestehend aus 2,2,2-Trifluorethylmethacrylat (TFEMA), 1,1,1,3,3,3-Hexafluorisopropylmethacrylat (HFIPMA), Heptadecafluordecylmethacrylat (HDFDMA) und Pentadecafluornonylmethacrylat (PDFNMA), Vinylchloridmonomer (VCM) und 1,1-Dichlorethen ausgewählt ist;
das mindestens eine neutrale hydrophile Monomer oder das mindestens eine hydrophile Monomer mit einer festen Ladung aus der Gruppe bestehend aus 2-Acrylamido-2-methyl-1-propansulfonsäure (AMPS), Kalium-3-sulfopropylmethacrylat, Vinylsulfonsäure, Vinylphosphonsäure, (3-Acrylamidopropyl)trimethylammoniumchlorid, (3-Methacryloylamino)propyltrimethylammoniumchlorid, (Vinylbenzyl)trimethylammoniumchlorid, 2-(Methacryloyloxy)ethyltrimethylammoniumchlorid (MADQUAT), 2-(Acryloyloxy)ethyltrimethylammoniumchlorid, N,N-Dimethylacrylamid, Polyethylenglykol (PEG)-Derivaten, 2-Hydroxyethylacrylat, Styrolsulfonsäure, N-2-Hydroxypropylmethacrylamid, Acrylamid und 2-Aminoethylmethacrylat ausgewählt ist;
das mindestens eine ionisierbare Säuremonomer aus der Gruppe bestehend aus Methacrylsäure, Acrylsäure, Mono-2-(methacryloyloxy)ethylsuccinat, Mono-2-(acryloyloxy)ethylsuccinat und Itaconsäure ausgewählt ist;
das mindestens eine ionisierbare basische Monomer aus der Gruppe bestehend aus 2-(Dimethylamino)ethylmethacrylat (DMAEMA), N,N-Dimethylacrylamid, 2-Aminoethylmethacrylat und 2-Aminoethylacrylat ausgewählt ist; der polymere Stabilisator aus Polyvinylalkohol, Polyvinylpyrrolidon, Poly(methacrylsäure) und Polyethylenglykol (PEG) ausgewählt ist; und wobei die Polymerisation gemäß Punkt (i) oder (ii) in Gegenwart von mindestens einem Vernetzungsmittel und mindestens einem Polymerisationsinitiator stattfindet und unter Verwendung des mindestens einen Monomers durchgeführt wird, das ausgewählt ist aus: einem halogenierten lipophilen Monomer, einem ionisierbaren Säuremonomer und einem ionisierbaren basischen Monomer, in einer Menge zwischen 30 und 90 Gew.-%, vorzugsweise zwischen 40 und 80 Gew.-%, bezogen auf das Gesamtgewicht der Polymerflocke.

2. Polymerflocke nach Anspruch 1, wobei, wenn das mindestens eine ionisierbare Säuremonomer verwendet wird, die Polymerisation in einer Suspension oder Dispersion in einem wässrigen Lösungsmittel bei einem pH-Wert durchgeführt wird, der niedriger als der pKa-Wert des mindestens einen ionisierbaren Säuremonomers ist, der vorzugsweise zwischen 0 und 3,5 liegt, während, wenn das mindestens eine ionisierbare basische Monomer verwendet wird, die Polymerisation in einer Suspension oder Dispersion in einem wässrigen Lösungsmittel bei einem pH-Wert durchgeführt wird, der höher als der pKa-Wert des mindestens einen ionisierbaren basischen Monomers ist, der vorzugsweise zwischen 9 und 14 liegt.

3. Polymerflocke nach Anspruch 1 oder 2, umfassend einen Kern, bestehend im Wesentlichen aus dem mindestens einen lipophilen Monomer und dem mindestens einen Monomer, ausgewählt aus: einem halogenierten lipophilen Monomer, einem ionisierbaren Säuremonomer und einem ionisierbaren basischen Monomer, die miteinander vernetzt sind, und eine äußere Hülle, bestehend im Wesentlichen aus:

   (i) dem mindestens einen neutralen hydrophilen Monomer oder hydrophilen Monomer mit einer festen Ladung, vernetzt mit dem mindestens einen lipophilen Monomer und mit dem mindestens einen Monomer, ausgewählt aus: einem halogenierten lipophilen Monomer, einem ionisierbaren Säuremonomer und einem ionisierbaren basischen Monomer des Kerns; oder
   (ii) dem mindestens einen polymeren Stabilisator, der an der Oberfläche des Kerns adsorbiert ist.

4. Polymerflocke nach einem der Ansprüche 1 bis 3, wobei die Polymerisation in einer Suspension oder Dispersion in einem wässrigen Lösungsmittel die folgenden Schritte umfasst:

   a) Mischen des mindestens einen lipophilen Monomers, des mindestens einen Monomers, ausgewählt aus: einem halogenierten lipophilen Monomer, einem ionisierbaren Säuremonomer und einem ionisierbaren basischen Monomer, mit einem Vernetzungsmittel und einem Polymerisationsinitiator;
   b) Suspendieren oder Dispergieren der Mischung in einer wässrigen Lösung, in der das mindestens eine neutrale hydrophile Monomer oder hydrophile Monomer mit einer festen Ladung gelöst ist; oder
   b') Suspendieren oder Dispergieren der Mischung in einer wässrigen Lösung des mindestens einen polymeren Stabilisators.

5. Polymerflocke nach einem der Ansprüche 1 bis 4, wobei das mindestens eine lipophile Monomer in einer Menge zwischen 50 und 99 Gew.-% verwendet wird, das mindestens eine neutrale hydrophile Monomer oder hydrophile Monomer mit einer festen Ladung in einer Menge zwischen 0,1 und 15 Gew.-% verwendet wird, der mindestens eine polymere Stabilisator in einer Menge zwischen 0,1 und 15 Gew.-%, bezogen auf das Gesamtgewicht der Polymerflocke, verwendet wird.

6. Polymerflocke nach einem der Ansprüche 1 bis 5, umfassend eine hydrophile Hülle mit einer festen Ladung, wobei die feste Ladung eine negative feste Ladung ist, und einen lipophilen und/oder halogenierten lipophilen Kern, erhalten aus der Polymerisation von:

   einer Mischung von A) mindestens einem lipophilen Monomer und B) mindestens einem Monomer, ausgewählt aus: einem halogenierten lipophilen Monomer, einem ionisierbaren Säuremonomer und einem ionisierbaren basischen Monomer; mit mindestens einem hydrophilen Monomer mit einer negativen festen Ladung, ausgewählt aus der Gruppe bestehend aus 2-Acrylamido-2-methyl-1-propansulfonsäure (AMPS), Kalium-3-sulfopropylmethacrylat, Vinylphosphonsäure, Styrolsulfonsäure und Vinylsulfonsäure.

7. Polymerflocke nach einem der Ansprüche 1 bis 5, umfassend eine hydrophile Hülle mit einer festen Ladung, wobei die feste Ladung eine positive feste Ladung ist, und einen lipophilen und/oder halogenierten lipophilen Kern, erhalten aus der Polymerisation von:

einer Mischung, umfassend A) mindestens ein lipophiles Monomer und B) mindestens ein Monomer, ausgewählt aus einem halogenierten lipophilen Monomer, einem ionisierbaren Säuremonomer und einem ionisierbaren basischen Monomer; mit

mindestens einem hydrophilen Monomer mit einer positiven festen Ladung, ausgewählt aus der Gruppe, bestehend aus (3-Acrylamidopropyl)trimethylammoniumchlorid, (3-Methacryloylamino) propyltrimethylammoniumchlorid, (Vinylbenzyl)trimethylammoniumchlorid, 2-(Methacryloyloxy) ethyltrimethylammoniumchlorid (MADQUAT) und 2-(Acryloyloxy) ethyltrimethylammoniumchlorid.

8. Polymerflocke nach einem der Ansprüche 1 bis 5, umfassend eine neutrale hydrophile Hülle und einen lipophilen und/oder halogenierten lipophilen Kern, erhalten aus der Polymerisation einer Mischung, umfassend A) mindestens ein lipophiles Monomer und B) mindestens ein Monomer, ausgewählt aus einem halogenierten lipophilen Monomer, einem ionisierbaren Säuremonomer und einem ionisierbaren basischen Monomer, mit:

(i) mindestens einem neutralen hydrophilen Monomer, ausgewählt aus N,N-Dimethylacrylamid, Polyethylenglykol (PEG)-Derivaten, 2-Hydroxyethylacrylat, N-2-Hydroxypropylmethacrylamid, Acrylamid und 2-Aminoethylmethacrylat; oder

(ii) in Gegenwart mindestens eines polymeren Stabilisators, ausgewählt aus Polyvinylalkohol, Polyvinylpyrrolidon, Poly(methacrylsäure) und Polyethylenglykol (PEG).

9. Polymerflocke nach einem der vorhergehenden Ansprüche, aufweisend einen Durchmesser mit Abmessungen zwischen 0,5 und 200 $\mu$m, vorzugsweise zwischen 3 und 100 $\mu$m, wobei die Abmessungen mit der dynamischen Lichtstreuungs- und/oder Laserbeugungstechnik gemessen werden.

10. Verwendung der Polymerflocke nach einem der vorhergehenden Ansprüche zur Entfernung und/oder Reduktion von in einem Fluid vorhandenen Schadstoffen, wobei die Schadstoffe aus der Gruppe bestehend aus Metallkationen, Metallanionen, Kohlenwasserstoffschadstoffen, halogenierten organischen Schadstoffen, vorzugsweise ausgewählt aus Kupferion, Nickel, Zink, Arsen, Vanadium, Eisen, Chrom, Ammoniumion, Chromation, Dichromat, Arsenat, Vanadat, Phosphat, Carbonat, aromatischen Kohlenwasserstoffverbindungen, aliphatischen Kohlenwasserstoffverbindungen, Alkanen $C_5$-$C_{20}$, fluorierten organischen Verbindungen, chlorierten organischen Verbindungen, Schmierölen, Perfluoroctansäure (PFOA), Pestiziden und Polyphenolen ausgewählt sind.

11. Verwendung der Polymerflocke nach Anspruch 10, wobei es sich beim Fluid um eine Flüssigkeit oder um ein Gas handelt, wobei die Flüssigkeit vorzugsweise aus Abwasser, galvanischen Bädern, flüssigen Abfällen aus der Weinherstellung, Abfällen aus in der Lebensmittelindustrie verwendetem Wasser, ammoniakalischen Lösungen und Vegetationswasser ausgewählt ist, wobei das Gas vorzugsweise aus Raffineriedämpfen, Dämpfen aus industriellen Produktionsanlagen und Dämpfen aus der Lebensmittelherstellung ausgewählt ist.

12. Verwendung der Polymerflocke nach Anspruch 6 zur gleichzeitigen Entfernung und/oder Reduktion von Metallanionen und Kohlenwasserstoffschadstoffen und/oder halogenierten organischen Schadstoffen.

13. Verwendung der Polymerflocken nach Anspruch 7 zur gleichzeitigen Entfernung und/oder Reduktion von Metallkationen und Kohlenwasserstoffschadstoffen und/oder halogenierten organischen Schadstoffen.

14. Verwendung der Polymerflocke nach Anspruch 8 zur selektiven Entfernung und/oder Reduktion von Kohlenwasserstoffschadstoffen und/oder halogenierten organischen Schadstoffen.

**Revendications**

1. Paillette polymère obtenue par polymérisation, dans une suspension ou une dispersion dans un solvant aqueux, d'un mélange comprenant A) au moins un monomère lipophile et B) au moins un monomère choisi parmi : un monomère lipophile halogéné, un monomère acide ionisable et un monomère basique ionisable :

(i) avec au moins un monomère hydrophile neutre ou au moins un monomère hydrophile ayant une charge fixe, ou
(ii) en présence d'au moins un stabilisateur polymère ; où :

ledit au moins un monomère lipophile est choisi dans le groupe constitué par le méthacrylate de méthyle, le méthacrylate de 2-hydroxyéthyle, l'acrylate de butyle, le méthacrylate de butyle, l'acrylate d'hexyle, le méthacrylate d'hexyle, l'acrylate de lauryle, le méthacrylate de lauryle, l'acétate de vinyle, l'acrylonitrile et le styrène ;

ledit au moins un monomère halogéné lipophile est choisi dans le groupe constitué par le méthacrylate de 2,2,2-trifluoroéthyle (TFEMA), le méthacrylate de 1,1,1,3,3,3-hexafluoroisopropyle (HFIPMA), le méthacrylate d'heptadécafluorodécyle (HDFDMA) et le méthacrylate de pentadécafluorononyle (PDFNMA), le chlorure de vinyle monomère (VCM) et le 1,1-dichloroéthène ;

ledit au moins un monomère hydrophile neutre ou ledit au moins un monomère hydrophile ayant une charge fixe est choisi dans le groupe constitué par l'acide 2-acrylamido-2-méthyl-1-propanesulfonique (AMPS), le méthacrylate de potassium 3-sulfopropyle, l'acide vinylsulfonique, l'acide vinylphosphonique, le chlorure de (3-acrylamidopropyl)triméthylammonium, le chlorure de (3-méthacryloylamino)propyl-triméthylammonium, le chlorure de (vinylbenzyl)triméthylammonium, le chlorure de 2-(méthacryloyloxy)éthyl-triméthylammonium (MADQUAT), le chlorure de 2-(acryloyloxy)éthyl-triméthylammonium, le N,N-diméthylacrylamide, les dérivés du polyéthylèneglycol (PEG), l'acrylate de 2-hydroxyéthyle, l'acide styrènesulfonique, le N-2-hydroxypropylméthacrylamide, l'acrylamide et le méthacrylate de 2-aminoéthyle ;

ledit au moins un monomère acide ionisable est choisi dans le groupe constitué par l'acide méthacrylique, l'acide acrylique, le succinate de mono-2-(méthacryloyloxy)éthyle, le succinate de mono-2-(acryloyloxy)éthyle et l'acide itaconique ;

ledit au moins un monomère basique ionisable est choisi dans le groupe constitué par le méthacrylate de 2-(diméthylamino)éthyle (DMAEMA), le N,N-diméthylacrylamide, le méthacrylate de 2-aminoéthyle et l'acrylate de 2-aminoéthyle ;

ledit stabilisateur polymère est choisi parmi l'alcool polyvinylique, la polyvinylpyrrolidone, le poly(acide méthacrylique) et le polyéthylèneglycol (PEG) ;

et où ladite polymérisation, selon le point (i) ou (ii), a lieu en présence d'au moins un agent de réticulation et d'au moins un initiateur de polymérisation et est réalisée en utilisant ledit au moins un monomère choisi parmi : un monomère lipophile halogéné, un monomère acide ionisable et un monomère basique ionisable en une quantité comprise entre 30 et 90 % en poids, de préférence entre 40 et 80 % en poids par rapport au poids total de la paillette polymère.

2. Paillette polymère selon la revendication 1, dans laquelle, lorsque l'au moins un monomère acide ionisable est utilisé, la polymérisation dans une suspension ou une dispersion dans un solvant aqueux est réalisée à un pH inférieur au pKa dudit au moins un monomère acide ionisable, de préférence compris entre 0 et 3,5, tandis que, lorsque l'au moins un monomère basique ionisable est utilisé, la polymérisation dans une suspension ou une dispersion dans un solvant aqueux est réalisée à un pH supérieur au pKa dudit au moins un monomère basique ionisable, de préférence compris entre 9 et 14.

3. Paillette polymère selon la revendication 1 ou 2, comprenant un noyau constitué essentiellement de l'au moins un monomère lipophile et de l'au moins un monomère choisi parmi : un monomère lipophile halogéné, un monomère acide ionisable et un monomère basique ionisable, réticulés entre eux, et une couronne externe constituée essentiellement de :

(i) l'au moins un monomère hydrophile neutre ou un monomère hydrophile ayant une charge fixe, réticulé avec l'au moins un monomère lipophile et avec l'au moins un monomère choisi parmi : un monomère lipophile halogéné, un monomère acide ionisable et un monomère basique ionisable du noyau ;
ou
(ii) l'au moins un stabilisateur polymère adsorbé sur la surface du noyau.

4. Paillette polymère selon l'une quelconque des revendications 1 à 3, dans laquelle ladite polymérisation dans une suspension ou une dispersion dans un solvant aqueux comprend les étapes de :

a) mélanger l'au moins un monomère lipophile, l'au moins un monomère étant choisi parmi : un monomère lipophile halogéné, un monomère acide ionisable et un monomère basique ionisable, avec un agent de réticulation et un initiateur de polymérisation ;
b) mettre en suspension ou disperser ledit mélange dans une solution aqueuse dans laquelle est dissous l'au moins un monomère hydrophile neutre ou un monomère hydrophile ayant une charge fixe ;
ou
b') mettre en suspension ou disperser ledit mélange dans une solution aqueuse de l'au moins un stabilisateur polymère.

5. Paillette polymère selon l'une quelconque des revendications 1 à 4, dans laquelle ledit au moins un monomère lipophile est utilisé dans une quantité comprise entre 50 et 99 % en poids, ledit au moins un monomère hydrophile neutre ou un monomère hydrophile ayant une charge fixe est utilisé dans une quantité comprise entre 0,1 et 15 % en poids, ledit au moins un stabilisateur polymère est utilisé dans une quantité comprise entre 0,1 et 15 % en poids par rapport au poids total de la paillette polymère.

6. Paillette polymère selon l'une quelconque des revendications 1 à 5, comprenant une couronne hydrophile avec une charge fixe, dans laquelle ladite charge fixe est une charge fixe négative, et un noyau lipophile et/ou halogéné lipophile, obtenu par polymérisation :

   d'un mélange A) d'au moins un monomère lipophile et B) d'au moins un monomère choisi parmi : un monomère lipophile halogéné, un monomère acide ionisable et un monomère basique ionisable ; avec
   au moins un monomère hydrophile ayant une charge fixe négative choisi dans le groupe constitué par l'acide 2-acrylamido-2-méthyl-1-propanesulfonique (AMPS), le méthacrylate de potassium 3-sulfopropyle, l'acide vinylphosphonique, l'acide styrènesulfonique et l'acide vinylsulfonique.

7. Paillette polymère selon l'une quelconque des revendications 1 à 5, comprenant une couronne hydrophile avec une charge fixe, dans laquelle ladite charge fixe est une charge fixe positive, et un noyau lipophile et/ou lipophile halogéné, obtenu par la polymérisation :

   d'un mélange comprenant A) au moins un monomère lipophile et B) au moins un monomère choisi parmi un monomère lipophile halogéné, un monomère acide ionisable et un monomère basique ionisable ; avec
   au moins un monomère hydrophile ayant une charge fixe positive choisi dans le groupe constitué par le chlorure de (3-acrylamidopropyl)triméthylammonium, le chlorure de (3-méthacryloylamino)propyl-triméthylammonium, le chlorure de (vinylbenzyl)triméthylammonium, le chlorure de 2-(méthacryloyloxy)éthyl-triméthyl-lammonium (MADQUAT) et le chlorure de 2-(acryloyloxy)éthyl-triméthylammonium.

8. Paillette polymère selon l'une quelconque des revendications 1 à 5, comprenant une couronne hydrophile neutre et un noyau lipophile et/ou lipophile halogéné obtenu par polymérisation d'un mélange comprenant A) au moins un monomère lipophile et B) au moins un monomère choisi parmi un monomère lipophile halogéné, un monomère acide ionisable et un monomère basique ionisable avec :

   (i) au moins un monomère hydrophile neutre choisi parmi le N,N-diméthylacrylamide, les dérivés du polyéthylèneglycol (PEG), l'acrylate de 2-hydroxyéthyle, le méthacrylamide de N-2-hydroxypropyle, l'acrylamide et le méthacrylate de 2-aminoéthyle ;
   ou
   (ii) en présence d'au moins un stabilisateur polymère choisi parmi l'alcool polyvinylique, la polyvinylpyrrolidone, le poly(acide méthacrylique) et le polyéthylèneglycol (PEG).

9. Paillette polymère selon l'une quelconque des revendications précédentes ayant un diamètre dont les dimensions sont comprises entre 0,5 et 200 pm, de préférence entre 3 et 100 pm, lesdites dimensions étant mesurées par la technique de diffusion dynamique de la lumière et/ou de diffraction laser.

10. Utilisation de la paillette polymère selon l'une quelconque des revendications précédentes pour l'élimination et/ou la réduction des polluants présents dans un fluide, dans laquelle lesdits polluants sont choisis dans le groupe constitué par les cations métalliques, les anions métalliques, les polluants hydrocarbonés, les polluants organiques halogénés, de préférence choisis parmi l'ion cuivre, le nickel, le zinc, l'arsenic, le vanadium, le fer, le chrome, l'ion ammonium, l'ion chromate, le dichromate, l'arséniate, le vanadate, le phosphate, le carbonate, les composés hydrocarbonés aromatiques, les composés hydrocarbonés aliphatiques, les alcanes en $C_5$-$C_{20}$, les composés organiques fluorés, les composés organiques chlorés, les huiles lubrifiantes, l'acide perfluorooctanoïque (PFOA), les pesticides et les polyphénols.

11. Utilisation de la paillette polymère selon la revendication 10, dans laquelle ledit fluide est un liquide ou un gaz, ledit liquide étant de préférence choisi parmi les eaux usées, les bains galvaniques, les déchets liquides de la production de vin, les déchets d'eau utilisés dans l'industrie alimentaire, les solutions ammoniacales et l'eau de végétation, ledit gaz étant de préférence choisi parmi les vapeurs de raffinerie, les vapeurs d'installations de production industrielle et les vapeurs de production alimentaire.

12. Utilisation de la paillette polymère selon la revendication 6, pour l'élimination et/ou la réduction simultanée des anions métalliques et des polluants hydrocarbonés et/ou des polluants organiques halogénés.

13. Utilisation de la paillette polymère selon la revendication 7, pour l'élimination et/ou la réduction simultanée des cations métalliques et des polluants hydrocarbonés et/ou des polluants organiques halogénés.

**14.** Utilisation de la paillette polymère selon la revendication 8, pour l'élimination et/ou la réduction sélective des polluants hydrocarbonés et/ou des polluants organiques halogénés.

**Fig. 1**

**Fig. 2**

**Fig. 3**

**Fig. 4**

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107141396
- CN 108047361
- EP 3146537 A
- WO 2001030495 A